# EUROPEAN PATENT SPECIFICATION

(11) **EP 1 333 287 B1**
(45) Date of publication and mention of the grant of the patent: **21.06.2006**
(21) Application number: 03000532.6
(22) Date of filing: 09.01.2003
(51) Int. Cl.: G01N 35/10, G01N 35/00

(54) **Method and apparatus for modifying pressure within a fluid dispenser**
Verfahren und Vorrichtung zur Druckänderung in einem Flüssigkeitspender
Méthode et appareil pour modifier la pression dans un dispenseur de fluide

(30) Priority: 30.01.2002 US 60602
(43) Date of publication of application: 06.08.2003
(73) Proprietor: VENTANA MEDICAL SYSTEMS, INC., Tucson, AZ 85737 (US)
(72) Inventor: Lemme, Charles, Tucson, Arizona 85719 (US); Rizzo, Vincent R. Jr., Tucson, Arizona 85737 (US)
(74) Representative: Müller-Boré & Partner Patentanwälte

(56) References cited:
- WO-A-92/04004
- US-A- 2 234 079
- US-A- 5 373 972
- US-A- 5 687 882
- US-B1- 6 199 766

## Description

### BACKGROUND OF THE INVENTION

### A. Field of the Invention

This invention relates to biological reaction systems, and more particularly relates to a method and apparatus for an automated biological reaction system.

### B. Description of Related Art

Immunostaining and *in situ* DNA analysis are useful tools in histological diagnosis and the study of tissue morphology. Immunostaining relies on the specific binding affinity of antibodies with epitopes in tissue samples, and the increasing availability of antibodies which bind specifically with unique epitopes present only in certain types of diseased cellular tissue. Immunostaining requires a series of treatment steps conducted on a tissue section mounted on a glass slide to highlight by selective staining certain morphological indicators of disease states. Typical steps include pretreatment of the tissue section to reduce non-specific binding, antibody treatment and incubation, enzyme labeled secondary antibody treatment and incubation, substrate reaction with the enzyme to produce a fluorophore or chromophore highlighting areas of the tissue section having epitopes binding with the antibody, counterstaining, and the like. Each of these steps is separated by multiple rinse steps to remove unreacted residual reagent from the prior step. Incubations are conducted at elevated temperatures, usually around 40°C, and the tissue must be continuously protected from dehydration. *In situ* DNA analysis relies upon the specific binding affinity of probes with unique nucleotide sequences in cell or tissue samples and similarly involves a series of process steps, with a variety of reagents and process temperature requirements.

Automated biological reaction systems include the biological reaction apparatus and the dispensers for the reagents and other fluids used in the biological reaction apparatus. As disclosed in United States Patent 5,595,707, inventors Copeland et al., entitled Automated Biological Reaction Apparatus, assigned to Ventana Medical Systems, Inc. which is incorporated herein by reference, the biological reaction apparatus may be computer controlled. However, the computer control is limited in that it is dedicated to and resident on the biological reaction apparatus. Moreover, the memory, which is used in conjunction with the computer control, contains data relating to the reagents including serial number, product code (reagent type), package size (250 test), and the like.

One of the requirements in a biological reaction system is consistency in testing. In particular, the biological reaction system should apply a predetermined amount of fluid upon the slide in order to consistently test each slide in the automated biological reaction apparatus. Therefore, an important focus of a biological reaction system is to consistently and efficiently apply a predetermined amount of fluid on the slide.

Further, as disclosed in U.S. Patent No. 5,232,664 entitled Liquid Dispenser by inventors Krawzak et al. and assigned to Ventana Medical Systems, Inc., which is incorporated herein by reference, reagents must be dispensed on the slide in precise amounts using a fluid dispenser. The fluid dispenser, which is used in conjunction with the biological reaction apparatus, should be easy to manufacture, reliable and compact in size.

WO 92/04004 discloses the features of the preamble of independent claim 1.

US 2 234 079 discloses closure means for a container comprising cap means, sealing means connected to the cap means providing a a seal between the connection of the cap means and the container, a bulb means forming a chamber communicating with an opening through which a substance from the container may pass, and valve means carried by a wall portion of the bulb means. The valve means is so constructed and arrange as to close the opening in the sealing means when the wall portion is in retroverted position and to uncover said wall portion in extended position.

US 5 373 972 discloses a fluid dispensing mechanism, comprising double self-sealing valves mounted in series inside a tip compartment which fits on the outlet of a multiple dosage squeeze container to prevent undesirable retrograde flow of the dispensed liquid back into the bottle during a decompression cycle. The valves used are either positive acting, normally closed duckbill and/or umbrella valve(s) which open to express solution from the container when squeezing pressure is applied to the bottle and which automatically close when the pressure is released.

### SUMMARY OF THE INVENTION

The invention is defined in independent claims 1, 9 and 16. Preferred or optional features are the subject of dependent claims 2 to 8, 10 to 15 and 17 to 22.

In accordance with the invention, a fluid dispenser for an automated biological reaction system is provided. The fluid dispenser has a reservoir chamber, a dispense chamber which is substantially in line with the reservoir chamber, and a means for transferring fluid between the dispense chamber and the reservoir chamber based on pressure differential between the dispense chamber and the reservoir chamber.

In accordance with the invention, a fluid dispenser for an automated biological reaction system is provided. The fluid dispenser has a barrel which has a reservoir chamber and an upper portion, a cap connected to the upper portion of the barrel, a valve adjacent to the reservoir chamber, and a coupler having a dispense chamber and the coupler being coaxial with the barrel.

In accordance with the invention, a fluid dispenser for an automated biological reaction system is provided. The fluid dispenser has a barrel which has a reservoir chamber and an upper portion, a cap connected to the reservoir chamber, a valve adjacent to the reservoir chamber, a coupler having a dispense chamber, and a vent adjacent to the cap. The vent includes a first means to maintain constant pressure in the reservoir chamber, a second means to maintain constant pressure in the reservoir chamber, and a space, the space being between the first and second means to maintain constant pressure in the reservoir chamber.

In accordance with the invention, a fluid dispenser for an automated biological reaction system is provided. The fluid dispenser has a barrel which has a reservoir chamber and a piston at a lower portion of the barrel, a cap connected to the reservoir chamber, a valve adjacent to the reservoir chamber, and a coupler. The coupler has a dispense chamber whereby the piston moves in the dispense chamber.

In accordance with the invention, a method of assembly of a fluid dispenser for an automated biological reaction system is provided. The method includes the step of inserting a valve and a valve insert into the lower portion of a barrel. The method also includes the step of welding the cap to the upper portion of the barrel. The method further includes the step of placing the ball in the check valve ball seat. Further, the method includes the step of snapping the check valve ball seat into the coupler. In addition, the method includes the step of snapping the coupler and barrel together.

In accordance with the invention, a method of filling and priming a fluid dispenser for an automated biological reaction system is provided. The method includes the step of providing the fluid dispenser with a cap, a barrel having a reservoir chamber, the barrel being adjacent to the cap, a dispense chamber adjacent to the reservoir chamber, and a nozzle adjacent to the dispense chamber. The method also includes the step of providing a syringe with a tip and a syringe plunger. The method further includes the step of opening the cap on the fluid dispenser. The method also includes the step of filling the reservoir chamber within the fluid dispenser with fluid. In addition, the method also includes the step of closing the cap on the fluid dispenser. Further, the method also includes the step of placing the tip of the syringe inside the nozzle of the fluid dispenser without requiring the fluid dispenser be turned upside down. And, the method also includes the step of expanding the plunger of the syringe in order to draw fluid from the reservoir chamber and the dispense chamber into the syringe.

In accordance with the invention, an automated biological reaction system is provided. The automated biological reaction system has a slide support carousel, drive means engaging the slide support carousel for moving the slide support carousel, a consistency pulse application station comprising at least one nozzle for directing a stream of fluid onto a slide which is less than 35 degrees from the horizontal, and a volume adjust application station positioned above the slide for applying a predetermined amount of fluid on the slide by dropping the fluid onto the slide.

In accordance with the invention, a fluid dispenser for an automated biological reaction system is provided. The fluid dispenser has a barrel, the barrel having a reservoir chamber and an upper portion. The fluid dispenser also has a cap connected to the upper portion of the barrel. The fluid dispenser also has a cup check valve, the cup check valve having a first end and a second end, the cup check valve adjacent to the reservoir chamber at the first end, the cup check valve having a cup piece at the second end. The fluid dispenser further has a dispense chamber adjacent to the second end of the cup check valve.

In accordance with the invention, a valve is provided. The valve passes fluid from one side of the valve to the other side based on a pressure differential between the one side and the other side, whereby the valve is placed in a housing. The valve includes an attachment, the attachment piece being attached to the housing, a connecting piece being connected to the attachment piece, and a cup piece. The cup piece is connected to the connecting piece. The cup piece abuts against the housing when the pressure on the one side of the valve is equal to the pressure on the other side of the valve. The cup piece does not abut against the housing when the pressure on the one side of the valve is unequal to the pressure on the other side of the valve.

In accordance with the invention, a method of equilibrating pressure within a fluid dispenser is provided. The method includes the step of providing a fluid dispenser with a barrel having a cap. The cap includes a surface with at least one hole and a valve having a biasing member and a hole sealer. The biasing member includes at least two positions. The also includes the step of placing the biasing member in one of the two positions by applying a force to the valve wherein in a first position of the biasing member, the hole sealer seals the hole and wherein in a second position, the hole sealer does not seal the hole.

In accordance with the invention, a method of mechanically operating a valve for a fluid dispenser is provided. The valve of the fluid dispenser includes a head and a bulge. The method includes the step of abutting the bulge against a hole in the fluid dispenser to create a seal. The method also includes the step of applying a mechanical force to move the head so that the bulge does not abut the hole. Further, the method includes the step of reducing the mechanical force so that the bulge abuts the hole.

The invention may be useful in a method for passing liquid through a housing based on a pressure differential is provided. The method includes the step of providing a valve having an attachment piece, a connecting piece being connected to the attachment piece, and a cup piece, the cup piece being connected to the connecting piece. The method also including the step of abutting the cup piece against the housing when the pressure on the one side of the valve is equal to the pressure on the other side of the valve. And, the method includes the step of flexing the cup piece inward so that the cup piece is not abutting against the housing when the pressure on the one side of the valve is unequal to the pressure on the other side of the valve.

In accordance with the invention, a fluid dispenser for an automated biological reaction system is provided. The fluid dispenser has a barrel having a reservoir chamber and a piston, the piston being adjacent to the reservoir chamber. The fluid dispenser also has an extension piece connected to the piston. And, the fluid dispenser has a coupler, wherein the coupler has a dispense chamber. The dispense chamber is adjacent to the reservoir chamber. Further, the extension piece moves inside the coupler.

An object of the invention is to provide a fluid dispenser, which is used in conjunction with a biological reaction apparatus, which is reliable.

Easy to manufacture, compact in size, and easy to prime.

These and other objects, features, and advantages of the present invention are discussed or apparent in the following detailed description.

### BRIEF DESCRIPTION OF THE DRAWINGS

A presently preferred embodiment of the present invention is described herein with reference to the drawings wherein:
FIG. 1A is an elevational cutaway view of a prefilled fluid dispenser in the extended position;
FIG. 1B is an elevational cutaway view of a user fillable fluid dispenser in the extended position;
FIG. 1C is an elevational cutaway view of a prefilled fluid dispenser in the compressed position;
FIG. 2A is a cutaway view of the ball chamber and nozzle;
FIGS. 2B and 2C are front and side cutaway views of the lower portion of the barrel with an extension section;
FIG. 3A is an exploded view of an elevational cutaway of a prefilled fluid dispenser;
FIG. 3B is an exploded view of an elevational cutaway of a user fillable fluid dispenser;
FIG. 4A is a side view of a prefilled fluid dispenser;
FIG. 4B is a side view of a customer fillable fluid dispenser with flip top;
FIG. 4C is an exploded view of a prefilled fluid dispenser with an evaporation ring adjacent the cap;
FIG. 5A is a cutaway view of the cap and vent of a prefilled fluid dispenser according to one embodiment;
FIG. 5B is an underside view of the cap and vent of FIG. 16A;
FIG. 5C is a cutaway view of the cap and vent of a prefilled fluid dispenser with a bi-directional duckbill valve;
FIG. 5D is a cutaway view of the cap and vent of a prefilled fluid dispenser with a uni-directional duckbill valve;
FIG. 5E is a cutaway view of the cap and vent of a prefilled fluid dispenser according to another embodiment;
FIG. 5F is a perspective view of a valve arranged to operate in accordance with an exemplary embodiment of the present invention;
FIG. 5G is a perspective view of a cap of a fluid dispenser arranged to operate in accordance with an exemplary embodiment of the present invention;
FIG. 5H is a perspective view of a valve of Figure 16F inserted into the cap of Figure 16G;
FIG. 5I is a perspective view of a vent as shown in Figure 16H arranged to operate in accordance with an exemplary embodiment of the present invention;
FIG. 5J is a side view of the cap of Figure 16H inserted into a fluid dispenser arranged to operate in accordance with an exemplary embodiment of the present invention;
FIG. 5K is a side view of one method of operating the valve of Figure 16F arranged to operate in accordance with an exemplary embodiment of the present invention;
FIG. 6A is a cutaway view of the lower portion of the barrel, duckbill check valve, duckbill check valve insert, quad seal, ball, ball check valve insert and coupler of a fluid dispenser;
FIG. 6B is a cutaway view of the lower portion of the barrel, duckbill check valve, duckbill check valve insert of a fluid dispenser;
FIG. 6C is a cutaway view of the quad seal of a fluid dispenser;
FIG. 7A is an alternative embodiment of a cutaway view of the lower portion of the fluid dispenser,
FIG. 7B is an alternative embodiment of a cutaway view of the lower portion of the fluid dispenser;
FIG. 8A is a cutaway view of a syringe with a restrictor for use in the nozzle of the coupler;
FIG. 8B is an exploded view of a syringe with a restrictor and an O-ring for use in the nozzle of the coupler;
FIG. 9 is an alternative embodiment of a cutaway view of the lower portion of the fluid dispenser with a cup check valve;
FIG. 10A is a side view of the cup check valve;
FIG. 10B is a bottom view of the cup check valve;
FIG. 10C is a top view of the cup check valve;
FIG. 10D is a view of the cup check valve at cross-section A-A in FIG. 21C;
FIG. 10E is a view of the cup check valve at cross-section B-B in FIG. 21C;

### DETAILED DESCRIPTION OF THE PREFERRED AND ALTERNATIVE EMBODIMENTS OF THE INVENTION

The automated immunostaining system of this invention performs all steps of immunohistochemical irrespective of complexity or their order, at the time and temperature, and in the environment needed. Specially prepared slides containing a bar code identifier and a mounted tissue section are placed in special supports on a carousel, subjected to a preprogrammed sequence of reactions, and are removed from the carousel, ready for examination. For purposes of clarity of the following description of the apparatus of this invention and not by way of limitation, the apparatus will be described in terms of immunohistochemical processes.

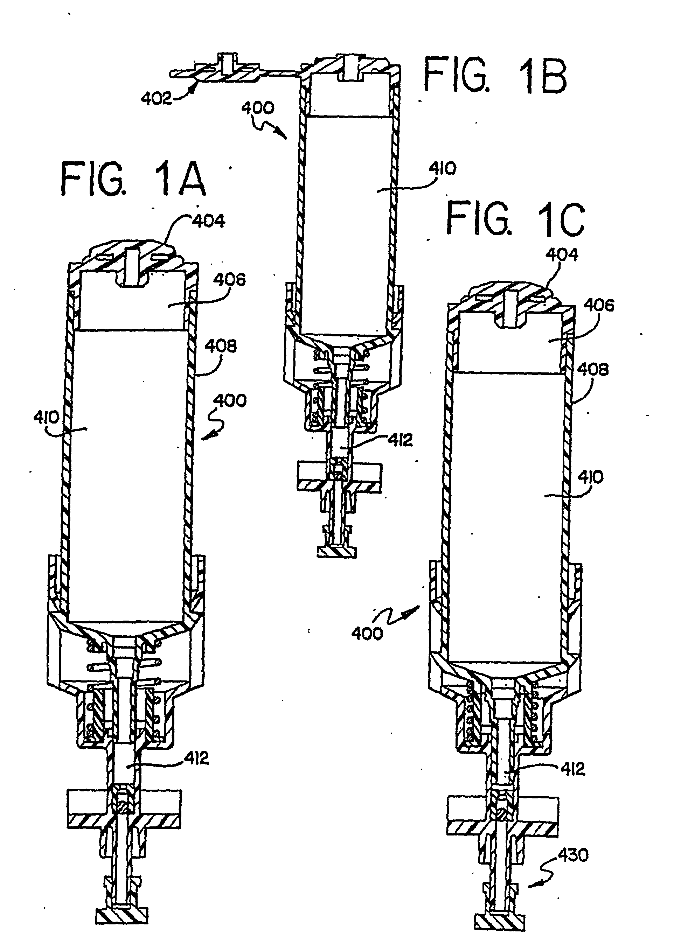

Referring to FIG. 1A, there is shown an elevational cutaway view of a prefilled fluid dispenser 400 in the extended position. FIG. 12B shows an elevational cutaway view of a user fillable fluid dispenser 400 in the extended position. The main difference between the prefilled and customer fillable dispensers is the substitution of a flip cap 402 to replace the snap cap 404. The fluid dispenser 400 has a reservoir chamber 410, which stores the fluid, and a dispense chamber 412, whereby the reservoir chamber 410 is above the dispense chamber 412. The reservoir chamber 410 is substantially in line with the dispense chamber, and in the preferred embodiment, coaxial with the dispense chamber 412.

Previous liquid dispensers had a side by side arrangement whereby the reservoir chamber was to the side of the dispense chamber. In this configuration, the reservoir chamber was smaller and therefore held less fluid. In the present invention the reservoir chamber can be enlarged thereby holding more fluid. For example, in previous dispensers, the reservoir chamber could hold approximately 27.5 mL of fluid whereas, in the present invention, the reservoir chamber can hold approximately 34.0 mL of fluid. Ordinarily, a single dispenser is rated to give 250 shots (*i.e.,* 250 dispenses of fluid). In order to provide the 250 shots in the previous dispensers, different types of couplers, depending on different types of reagents had to be made. This was due, in part, to the limited capacity of the reservoir chamber and to the thickness of the fluids (some fluids dispense different amounts based on the viscosity of the fluid). Because of the increased capacity of the reservoir chamber in the present invention, the dispenser can provide 250 shots, regardless of the viscosity of the fluid, so that different couplers are not necessary.

Moreover, previous fluid dispensers which included a reservoir chamber 410 that was to the side of the dispense chamber 412 required a connecting or horizontal section which connected the reservoir chamber 410 with the dispense chamber 412. In addition to potential problems of clogging of the horizontal section, the previous design was more difficult to manufacture. In particular, the side-by-side design required that the molding process of the horizontal or connecting piece be carefully controlled so that all sides of the connecting piece interact correctly with the reservoir chamber 410, the dispense chamber 412, and the ball chamber 432 and nozzle 430. As described subsequently, the ball chamber 432 includes a ball 426 which seats in the upper part of the ball chamber 432 during a portion of the operation of the fluid dispenser 400. In previous designs, the coupler was formed via a T-shaped chamber, i.e. a horizontal chamber abutting two vertical pieces. At the intersection of the pieces, the ball seat area was formed. In manufacturing this coupler, the consistency of the T-shaped piece varied so that the ball seat area was, at times, difficult to manufacture properly. In the present invention, the fluid dispenser 400 requires no horizontal connecting portion between the reservoir chamber 410 and the dispense chamber 412. The reservoir chamber 410 is on top of dispense chamber 412 and, in the preferred embodiment; the reservoir chamber 410 is coaxial with the dispense chamber 412. Since the flow is substantially in one line or vertical, the T-shaped piece is removed. Moreover, the ball seat area is replaced by a check valve ball insert 424 which is a separate and smaller molded piece, and therefore can be controlled, from a manufacturing standpoint, better than in previous designs.

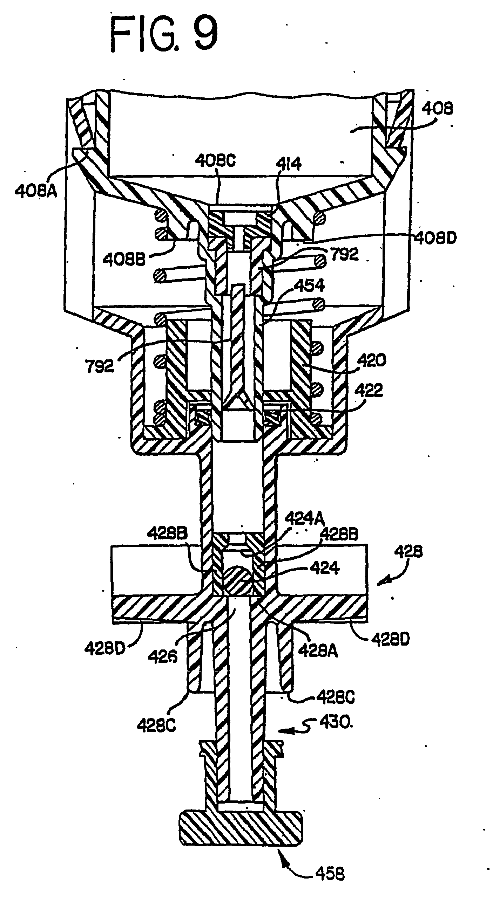

In the preferred embodiment, the reservoir chamber 410 shape is as shown in FIGS. 1A and 1B. The reservoir shape may also be funnel-like or any other shape which drains the fluid through the connecting means between the reservoir chamber 410 and the dispense chamber 412. The connecting means between the reservoir chamber 410 to the dispense chamber 412 in the preferred embodiment is a valve, such as a duckbill check valve 416 which has a means to sense pressure differentials. The duckbill check valve is manufactured by Vernay Laboratories, Inc. in Yellow Springs, Ohio, part number X6597-E. In alternate embodiments, the connecting means is any device which transfers fluid in one direction (from the reservoir chamber 410 to the dispense chamber 412) and which passes fluid based on a pressure differential. This includes using an umbrella valve or the cup check valve 792 as described in FIGS. 9-10.

Fluid is ejected from the dispense chamber 412 by exerting a downward force on the cap, against the force of the compression spring 418. This forces the barrel 408 downward until it reaches the stop 420 which prevents the barrel 408 from further downward movement, as shown in FIG. 1C. When the fluid dispenser 400 is mounted on a reagent tray 10, the downward force on the cap 404 is applied by the dispense cylinder extend air line, or by some other means to push the barrel 408 downward. The downward movement of the barrel 408, including the lower portion of the barrel which acts as a piston, expels fluid from the dispense chamber 412.

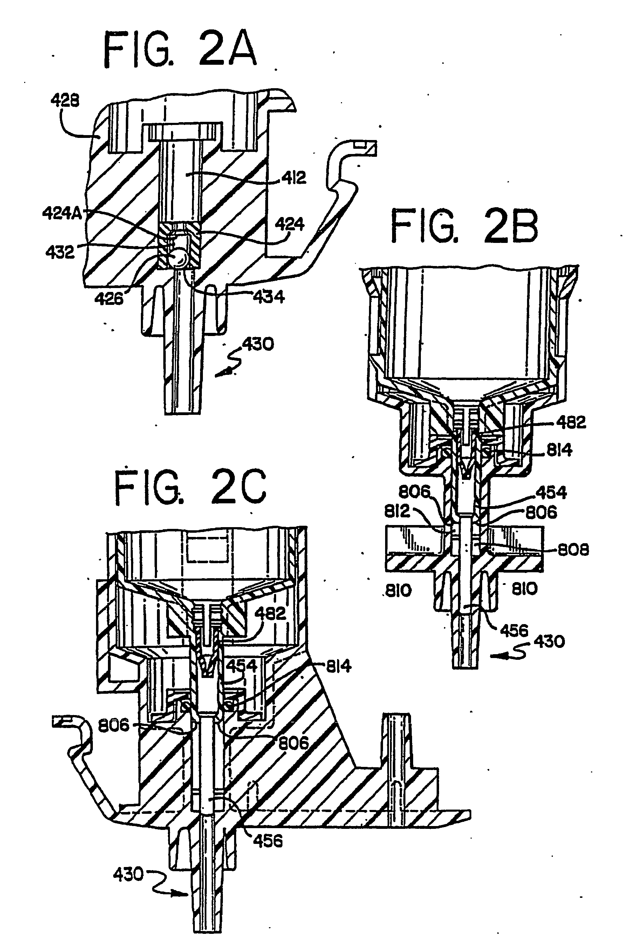

As the spring 418 expands, the barrel 408 moves upward and the ball 426 moves upward as well. Referring to FIG. 2A; there is shown a detailed view of the ball chamber 432 and nozzle 430. The coupler 428 is formed where a hole in the coupler is offset for ball chamber 432 so that an inner edge of nozzle 430 protrudes into the outlet of ball chamber 432. Ball chamber 432 contains a ball 426 which fits loosely against the cylindrical surface of ball chamber 432 and is free to move between an uppermost position and a lowermost position. In its uppermost position, ball 426 mates with the ball check valve insert 424, thereby preventing fluid flow in the direction from nozzle 430 to dispense chamber 412. At its lowermost position, the ball 426 is restrained by inner edge of nozzle 430 and prevented from falling into nozzle 430. This does not prevent fluid from flowing from ball chamber 432 to nozzle 430, however.

Using the above described structure as a basis, the operation and unique characteristics of fluid dispenser 400 will now be described. At the beginning of a dispense stroke, the fluid dispenser 400 is in the positions shown in FIGS. 1A and 1B. When fluid is to be dispensed, a downward force is applied against cap 402. This overcomes the force of compression spring 418 and forces the barrel 408 downward until it reaches the top of the stop 420, thereby dispensing a predetermined volume of liquid equal to approximately 100 µL. This is equal to the liquid volume of the area that the barrel 408 moves down minus the "suck back" (which is the amount of fluid that travels past the ball on the upstroke of the barrel 408 before the ball 426 shuts off the flow). The fluid flows from dispense chamber 412 into ball chamber 432. The downward flow through ball chamber 432 forces ball 426 to its lowermost position, abutting edge 434, but this does not prevent flow in this direction and the measured amount of fluid is ejected from nozzle 430.

When the barrel 408 has reached its lower extreme position, the downward force on cap 402 is released, by the microcontroller 36 actuating the valve 248B for the dispense cylinder retract air line; and compression spring 418 takes over, forcing barrel 408 and cap 402 in an upward direction. Fluid begins to be sucked into dispense chamber 412, which was described previously as the "suck back."

It is here that the interplay of ball check valve insert 424 and ball 426 in the ball chamber 432 is described. The ball 426 moves freely within ball chamber 432, and therefore provides essentially no resistance to fluid flow from nozzle 430 until it reaches its sealing position at the ball check valve insert 424. When the dispenser operation is completed, the fluid flow has forced ball 426 to its lowermost position, abutting edge 434. As the upward movement of the barrel 408 begins to draw fluid back into dispense chamber 412, the upward flow of fluid in ball chamber 432 pulls ball 426 upward until it reaches ball check valve insert 424, where it cuts off any further fluid flow toward dispense chamber 412. Until ball 426 reaches the ball check valve insert 424, however, there is virtually no resistance to fluid flow from nozzle 430, and therefore no pressure differential is created across duck bill check valve 416 sufficient to cause fluid flow from reservoir chamber 410 to dispense chamber 412.

The volume of fluid which, flows from nozzle towards dispense chamber 412 ("suck back") while ball 426 is moving from its lowermost to its uppermost position is preselected to be a volume equal to the volume of the hanging drop left at tip at the end of the dispense cycle. Thus, the drip is effectively drawn back into nozzle 430 and an internal meniscus forms at tip.

When ball 426 reaches the ball check valve insert 424, it shuts off further flow from nozzle 430 into dispense chamber 412. This immediately creates a pressure differential across duckbill check valve 416 and causes fluid to flow from reservoir chamber 410 into dispense chamber 412. The suction generated in dispense chamber 412 keeps ball 426 firmly seated against the ball check valve insert 424 and prevents any further flow from nozzle 430. When compression spring 418 has forced barrel 408 upward, as shown in FIGS. 1A and 1B, the fluid dispenser 400 is ready for another dispense cycle. When the pressure differential is at equilibrium, the ball 426, being made of a material slightly more dense than the liquid, falls through ball chamber 432 until it make contact again with edge 434.

Referring to FIGS. 2B and 2C, there is shown a front and side cutaway of the lower portion of the fluid dispenser 400, respectively, in an alternative embodiment of the invention wherein the ball check valve insert 424 and ball 426 are removed. In order to retract a hanging drop from the edge of the nozzle 430, the piston 454 on the end of the barrel 408 has an extension piece 456 connected to it. In this manner, when the barrel 408 is raised upward, the extension piece 456 moves upward as well, thereby retracting any drops on the edge of the nozzle 430. In particular, FIG. 2B shows the barrel is in the down position.

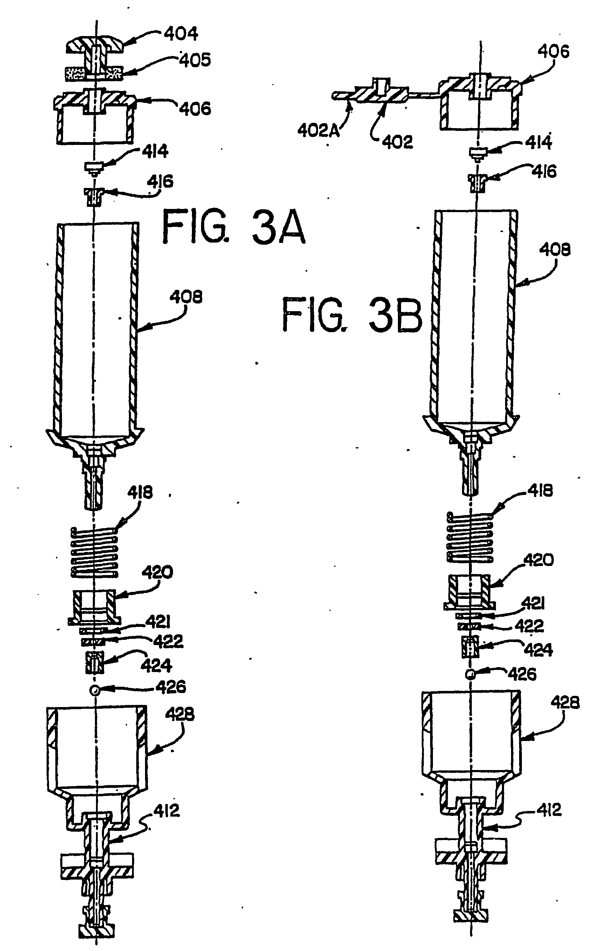

There are holes 806 where the extension piece is attached to the bottom of the piston 454. In an alternate embodiment, the piston 454 has a single hole 806. When the piston rides down, the O-ring 810 is a tight fit with the extension piece so that the O-ring 810 travels with the extension piece. Because the O-ring 810 is not flush with the chamfer 808 (which is a cone shaped), fluid in the dispense chamber can flow down around the back side of the O-ring 810 and out through the nozzle 430. A second O-ring 814 takes the place of the quad seal 422, as shown in FIGS. 3A - 3B.

On the upstroke, the O-ring 810 travels with the extension piece 454, which is attached to the piston 454, until the O-ring 810 seats against the chamfer 808. In this manner, the extension piece 454 acts as a piston extension. The chamfer 808 is housed inside the O-ring insert 812 and is fixed during movement of the piston. The O-ring insert 812 is connected to the coupler 428. When the O-ring 810 seats in the chamfer 808 (closing off any flow), there is a vacuum created in the dispense chamber 412, which creates the pressure differential to dispense fluid into the dispense chamber 412 through the check valve 482. Simultaneously with the upstroke, the fluid travels with the extension piece 454, and the drop at the end of the tip of the dispenser travels with the fluid due to surface tension. Therefore, the hanging drop is pulled back into the nozzle 430. Moreover, with the barrel 408 in the up position, fluid does not travel through the holes 806 due to the O-ring 810 seating inside the chamfer 808. In this embodiment, the ball and ball check valve insert is not necessary.

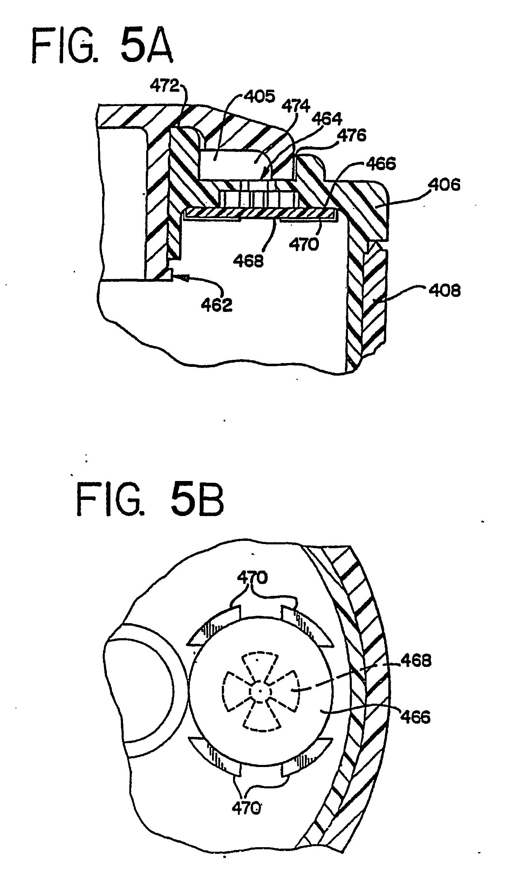

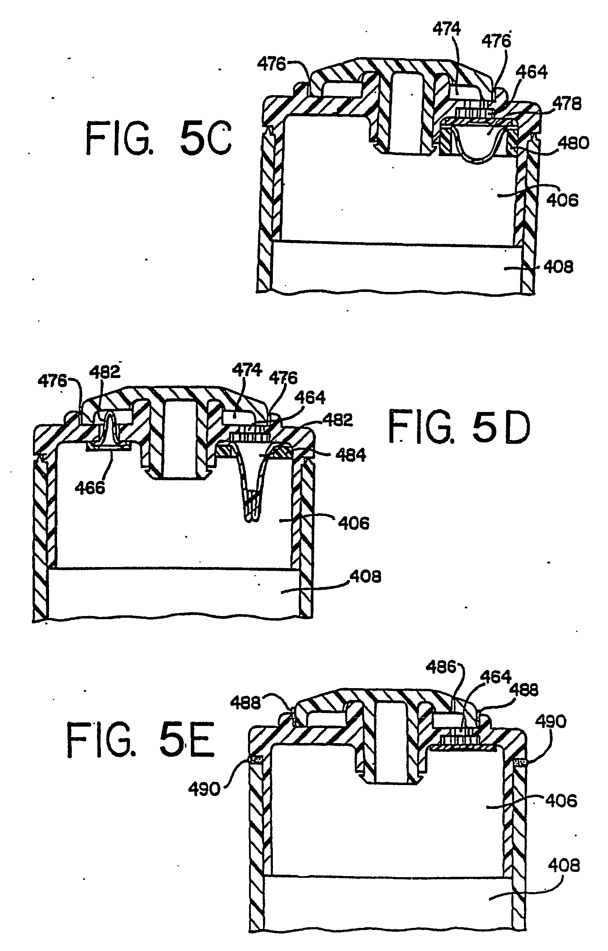

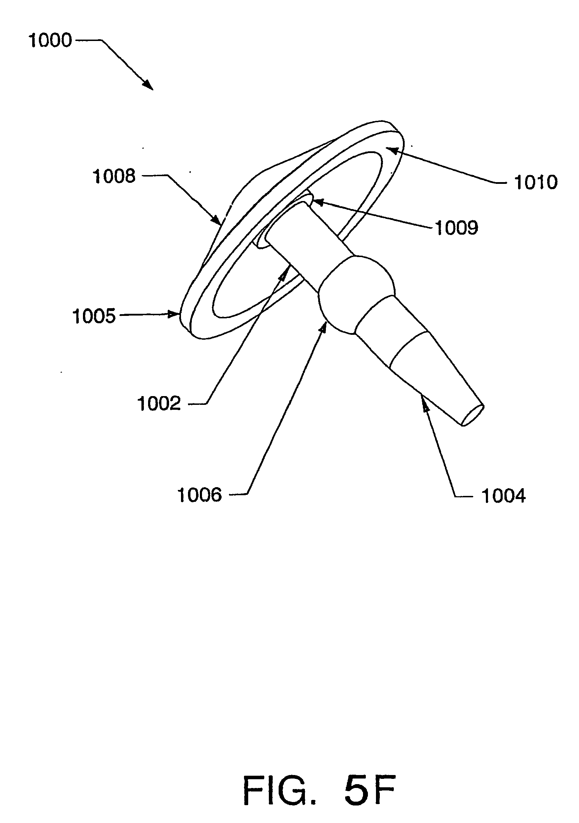

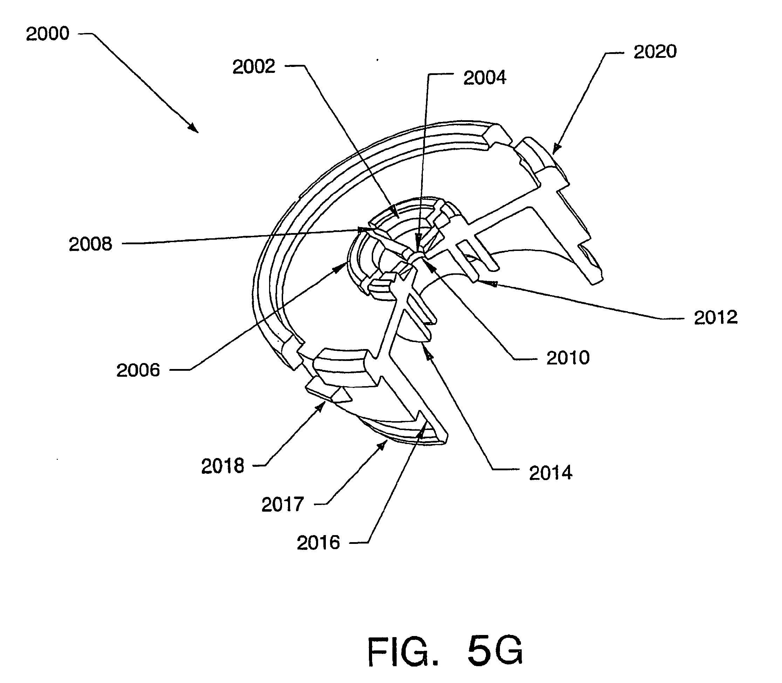

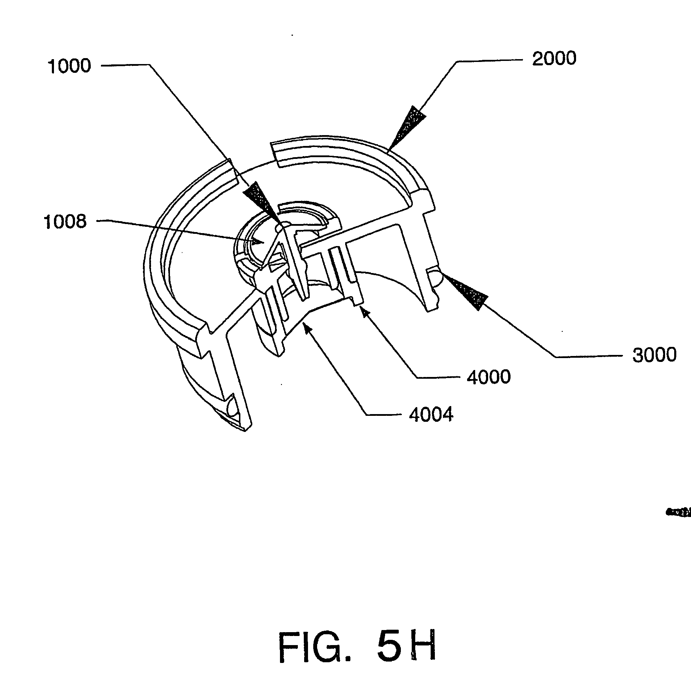

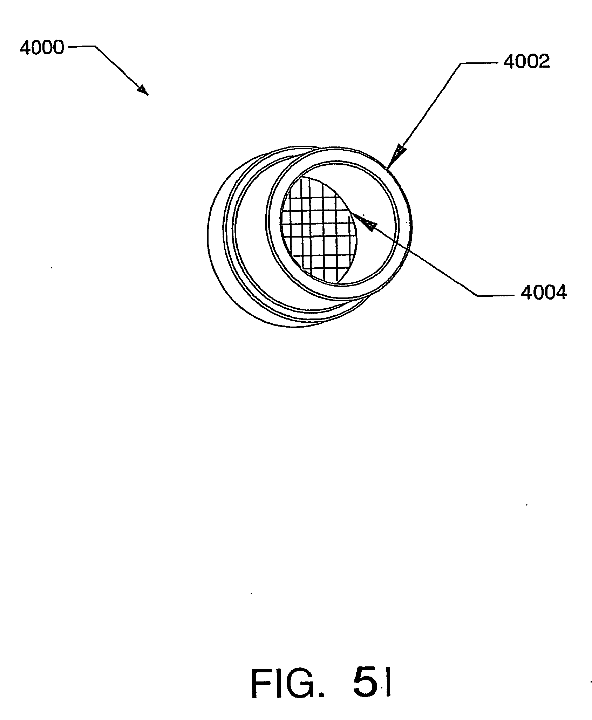

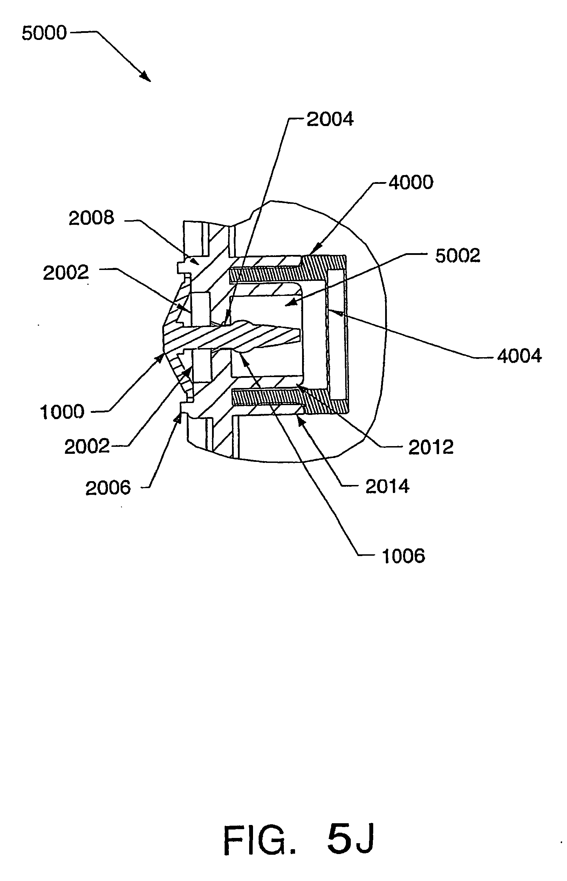

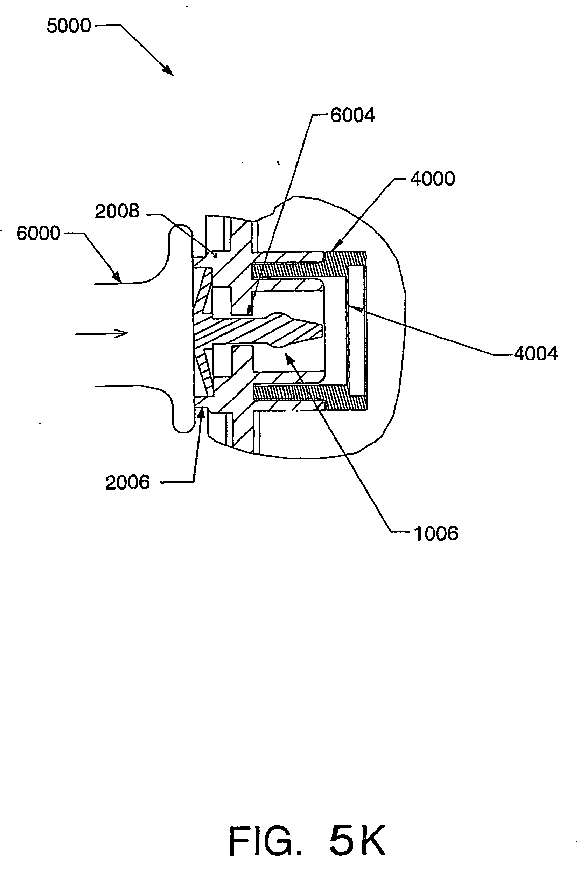

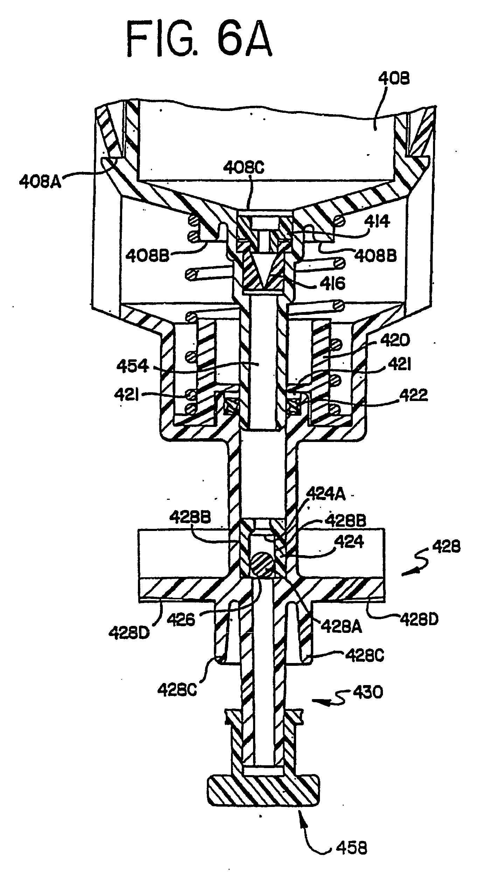

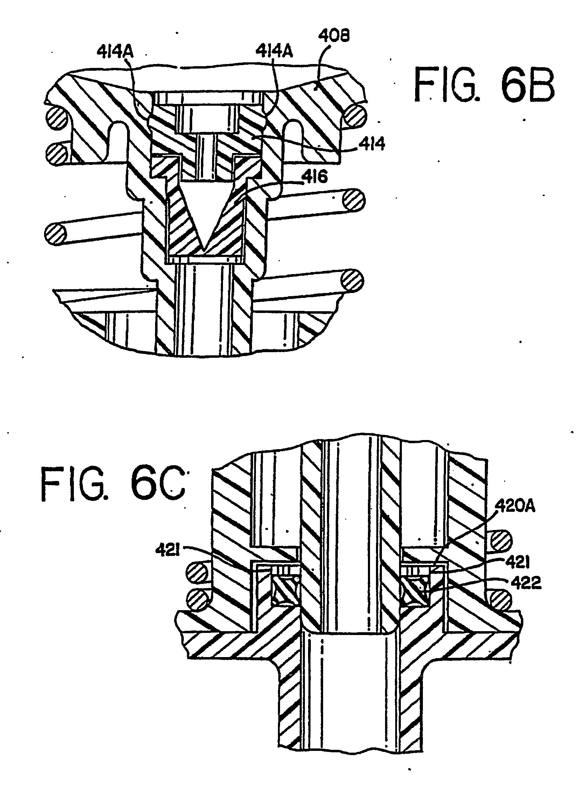

Referring to FIGS. 3A and 3B, there are shown exploded views of a cutaway of a prefilled and user fillable fluid dispenser 400, respectively. Differences between the prefilled and the user fillable fluid dispensers include: (1) the snap cap 404, as shown in FIGS. 3A and 3B; the barrel 408 being transparent in the user fillable fluid dispenser; and (3) the lack of an evaporation ring 405 in the user fillable fluid dispenser. Fluid can be filled into the reservoir through a fill hole and subsequently closed using a snap cap 404 in order to close the system. For prefilled fluid dispensers, the snap cap 404 is permanently attached over the fill hole after filling. The fill hole and the snap cap 404 are matched using a luer fitting design in order to be a tight seal, as shown in FIG. 5. The user fillable fluid dispenser 400 utilizes a living hinge design and luer slip design between the fill hole and the flip cap 402. The cap 406, as previously described, is sonically welded to the barrel 408. The cap 406 also has a vent 460, which is described subsequently with respect to FIG. 5. The duckbill check valve insert 414 holds the duckbill check valve 416 in place and creates a seal so that fluid cannot drip either from the dispense chamber 412 to the reservoir chamber 410 or from the reservoir chamber 410 to the dispense chamber 412. Further, the duckbill check valve insert 414 has a protrusion, or a nipple, which holds the duckbill to it for ease of assembly, as shown in more detail in FIG. 6B. The duckbill check valve 416, which serves as a check valve, is snapped to the duckbill check valve insert 414. The duckbill check valve 416 is a one way valve with a high cracking pressure of between .6 to 3.0 psi. This acts to hold the fluid in the reservoir chamber 410 since the cracking pressure is greater than the head pressure of fluid in the reservoir chamber 410. And, the duckbill passes fluid from the reservoir chamber 410 to the dispense chamber 412 on the upstroke of the barrel 408 while preventing fluid to pass during the downstroke of the barrel 408. The duckbill check valve 416 and duckbill check valve insert 414 are seated in the lower portion of the barrel 408 as shown in FIG. 6A.

The spring 418 is a compression spring which expands and contracts based on the movement of the barrel 408. The stop 420, as described previously, stops the downward stroke of the barrel 408. The stop also holds the quad seal 422 in place during movement of the fluid dispenser 400 and composed of polypropylene. The stop 420 is held in place based on the compression spring 418 with the force varies based on the movement of the barrel 408. The stop 420 is held in place, in turn, keeps the quad seal 422 in place via a ledge 420A, as shown in FIG. 6C, on the stop 420. The quad seal 422 ensures that the fluid dispenser 400 is always a closed system thereby keeping the fluid dispenser 400 primed. The quad seal 422 is made of Viton™ rubber that is a fluoroelastomer, and is distributed by Lutz Sales, in Hanover Park, Illinois, part number QS-008-2799. The ball check valve insert 424 is a separate part from the coupler 428 and is seated inside the coupler 428, being snapped into place by grooves in the chamber of the coupler 428 and by being seated on a ledge 428A, as shown in FIG. 6A. The ball check valve insert 424 has a ball seat 424A on the inside with which to engage the ball 426 on the upstroke of the barrel 408. Previous fluid dispensers integrated the coupler with the ball check valve insert for the ball. However, manufacturing of the coupler integrating those functions was difficult due to the fact that 3 pins, at the positions of 12:00, 3:00 and 6:00, had to come together and not distort the ball check valve insert. Therefore, processing is simplified by separating the ball check valve insert 424 from the coupler 428. The inner cavity 432 of the ball check valve insert 424, which engages the ball 426, may then be manufactured more easily. The ball 426 is made of borosilicate (which is a type of glass). In an alternative embodiment, a ball 426 composed of rubber may be used. In certain instances, a rubber ball may seat better in the plastic ball check valve insert 424, provided there is no chemical interaction of the rubber ball with the reagents.

Assembly and filling of the fluid dispenser 400 is simple based on the invention. The duckbill check valve 416 and duckbill check valve insert 414 are placed in the lower part of the barrel 408. The cap 406 is welded to the barrel. The ball 426 is placed, the ball check valve insert 424 is snapped and then the quad seal 422 is inserted into the coupler 428. The stop 420 and the spring 418 are inserted into the coupler 428 and the coupler 428 is snapped on to the barrel 408. The barrel 408 is filled with reagent and the fluid dispenser 400 is primed. The cap 404 is placed on the top of the dispenser and the nozzle cap 458 is placed on the output of the nozzle 430 on the coupler 428.

Further, the present invention allows for easier manufacture and filling of the reagents in the fluid dispenser 400. Previous fluid dispensers required gluing of many pieces and sonic welding after filling the dispenser, thus requiring a certain level of skill and training. In contrast, the fluid dispenser of the present invention requires snapping in of pieces and only the sonic welding of the vent 460 to the cap 406 and the cap 406 to the barrel 408. Moreover, the filling of the reagents in the fluid dispenser 400 is easier in the present invention. In previous fluid dispensers, the fluid dispenser is assembled except for the piston, piston guide, cap and nozzle cap. The reservoir chamber is filled with reagent. The piston and piston guide are then placed in the reservoir chamber and any leftover fluid on top of the piston is evacuated. Finally, the cap is sonically welded or screwed onto the top of the barrel 408. In the present invention, since there is no piston in the reservoir chamber 410, there is no need to evacuate the area on top of the piston. Instead, the cap 406 is first sonically welded to the barrel 408, and then the reagents are added to the reservoir chamber 410. In this manner, there are fewer steps in the filling of the dispenser. Moreover, in the present invention, some of the more manufacturing sensitive parts are smaller, thereby making manufacturing easier. In the preferred embodiment, the material used is polypropylene. Under these conditions, smaller parts have a higher level of dimensional stability. Therefore, smaller components, such as the ball check valve insert 424 (which is, in the present invention, a separate component from the coupler 428) are able to be processed more consistently.

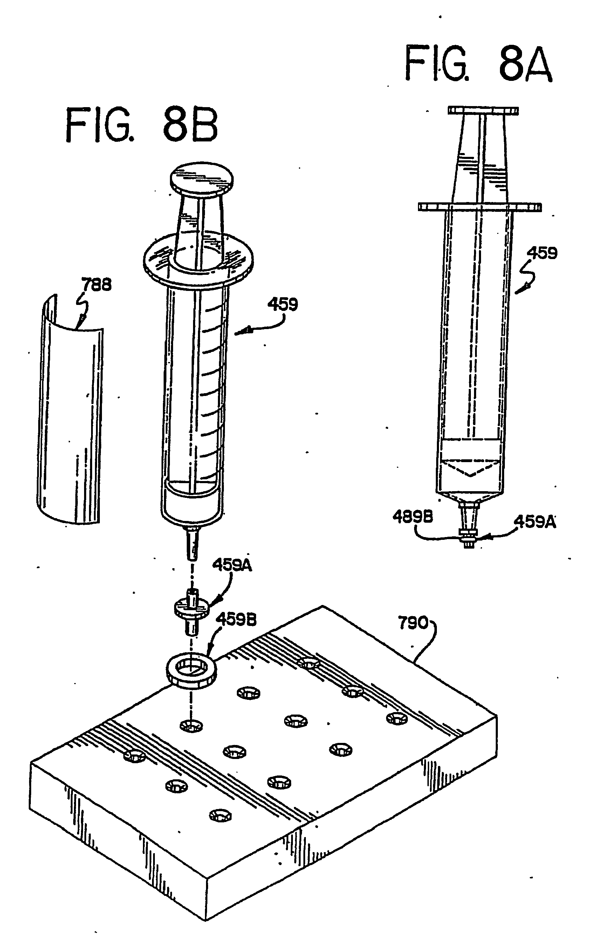

Referring to FIGS. 14A and 14B, there are shown side views of a prefilled fluid dispenser 400 and customer fillable fluid dispenser 400, respectively. Both types of dispensers have barcode labels which are read by the barcode reader 276, as described above. In order to allow the customer to fill the fluid dispenser 400 with reagent, the snap cap 404 is replaced by a flip cap 402 which varies in two ways from the snap cap: (1) the flip cap has an attachment to the cap; and (2) the flip cap has a protrusion 402A which acts as a thumbpad to prop open the flip cap 402. In previous fluid dispensers, the fluid dispenser had to be inverted in order to prime the syringe. The customer was required to first fill up a transfer syringe manually, push on an epindorf syringe and fill up this syringe. Then, the customer pressed this syringe into the coupler and forced fluid from the syringe through the connecting section between the reservoir chamber and the dispense chamber. The customer had to then pump the plunger, at least 6 to 8 times, holding the coupler upside-down, until fluid came out of the nozzle which did not have any bubbles. In the present invention, the customer opens the flip cap, fills the reservoir chamber 410, and closes the flip cap. The customer, without turning the fluid dispenser upside down, uses a typical syringe 459, as shown in FIG. 8A, to prime the fluid dispenser 400. The syringe may be manufactured by B-D Corp., in Franklin Lakes, New Jersey, size 20cc, part number BC301032. The syringe 459 has a restrictor 459A and an O-ring 459B. The restrictor 459A has an internal diameter of approximately 5 thousandths of an inch. The syringe 459 is placed inside the nozzle 430 of the coupler 428 and the syringe plunger is expanded to draw fluid from the reservoir chamber 410 and the dispense chamber 412. To prime the fluid dispenser 400 more quickly, the barrel 408 is pushed down, and is released simultaneously when the syringe plunger is expanded. In this manner, there is significantly less waste of reagent. In the previous fluid dispensers, the pumping of the plunger 6-8 times wasted reagent. In the present fluid dispenser 400, any reagent is sucked into the syringe 459. Because the syringe 459 is clean, its contents may be placed back into the reservoir chamber 410 through the flip cap 402, without waste of any reagent.

Referring to FIG. 8B, there is shown an exploded view of the syringe 459 (and a syringe label 788) with a restrictor 459A and an O-ring 459B for use in the nozzle of the coupler. The O-ring 459B is placed on the side of the restrictor 459A that does not have the v-notch in it. The restrictor 459A, with the O-ring 459B side down, is placed into a holding fixture 790, as shown in FIG. 8B. The syringe 459 is then pressed onto the restrictor 459A for assembly. The restrictor 459A is made by Airlogic, in Racine, Wisconsin, part number F-2815-050 (color: lime green), with a one inch orifice for the restrictor 459A. The O-ring 459B is manufactured by Parker Co., in Lexington, Kentucky, part number 2-003. The restrictor 459A fits well in the nozzle of the syringe 459 so that the syringe 459 does not need the O-ring 459B to seat against the coupler. Because of potential differences in mold runs for the coupler 428 of the fluid dispenser 400, the O-ring 459B is used so that the restrictor 459A fits tightly against the coupler 428.

To check for a good prime, the customer may flip the dispenser upside-down, tap the dispenser, dislodging any trapped air then pressing down on the barrel slowly to move the air bubble past the ball seat. The customer may then flip the coupler right-side-up and release the barrel. Good priming occurs with approximately one drop of waste.

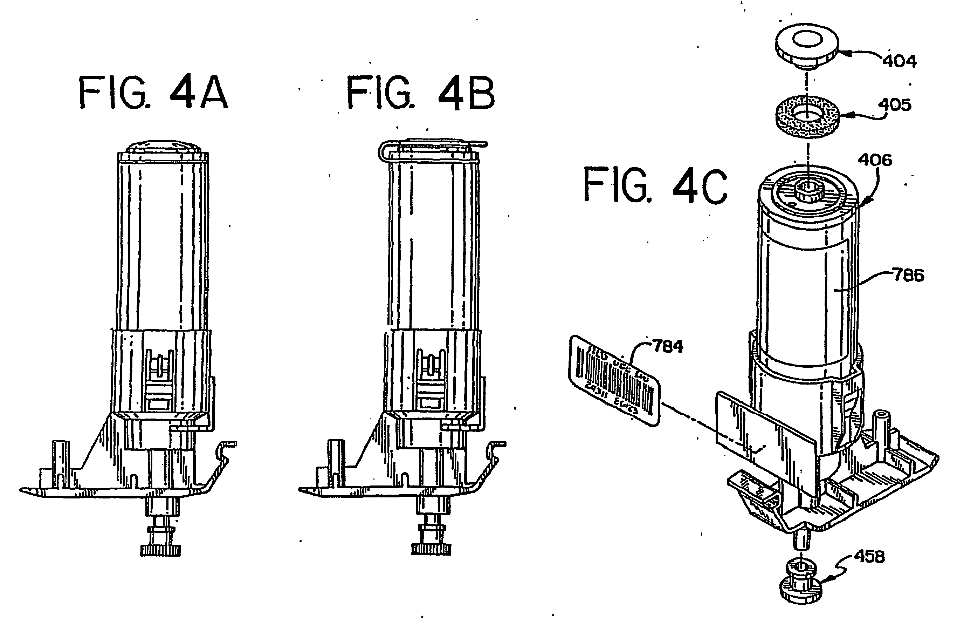

Referring to FIG. 4C, there is shown an exploded view of a prefilled fluid dispenser with an evaporation ring 405 adjacent to the cap. The interaction of the vent, the evaporation ring 405 and the cap are discussed subsequently with respect to FIGS. 5A-E. The barcode label 784 is placed on the dispenser in order to be read by the barcode reader 276. The dispenser label 786 is also placed on the dispenser.

Referring to FIG. 5A, there is shown a cutaway view of the cap 406 and vent 460 of a fluid dispenser 400. The vent is the component adjacent the top of the cap and includes the vent area 464, vent material 466, and backing 468. The vent 460 is used as a means to allow air to flow both into and out of the reservoir chamber 410 (i.e., so that the reservoir chamber can "breathe"). The vent 460 allows for a constant pressure in the reservoir chamber and equalizes the pressure in the reservoir chamber 410 with the pressure in the atmosphere. There are several ways in which to construct the vent in order to maintain a constant pressure in the reservoir chamber 410 and/or equalize the pressure in the reservoir chamber 410. In the preferred embodiment, as discussed more fully in subsequent figures, the vent area is approximately 70 thousandths of an inch, with a vent material 466 composed of a hydrophobic material. By experimentation, it was determined that due to size of the opening, fluid in the reservoir chamber was evaporating through the vent area. In order to reduce the evaporation (*i.e.,* have the reservoir chamber "breathe" less), an evaporation ring 405, as shown in FIGS. 4C and 5A was inserted in the air gap formed between the snap cap 404 and the cap 406. This evaporation ring 405 restricts the amount of air flow across the vent area, thereby reducing the amount of evaporation of fluid from the reservoir chamber.

In an alternative embodiment, the vent area is reduced to approximately 10 thousandths of an inch, thereby reducing the amount of evaporation from the reservoir chamber 410. However, processing a fluid dispenser with a reduced vent area is more difficult due to the corresponding reduced area of the vent material. In another alternative embodiment, the vent area 464 may be any area. And, the vent material may be composed of a tighter material, thereby reducing the air flow through the vent material and reducing the amount of evaporation through the vent area 464. In the preferred embodiment, the vent material is 1µm in the size of the mesh. Reducing the size of the mesh, such as to .25µm, further reduces the amount of evaporation through the vent area 464. In another alternative embodiment, the vent area may be any area and a section of tape is placed across the vent area. The tape contains a pin hole whereby the vent area is effectively reduced thereby reducing the amount of evaporation.

As shown in FIG. 5A, the cap 406 and snap cap 404 (or flip cap 402 for user fillable fluid dispensers) are luer fitting design so that the cap 406 and snap cap 404 portion which engage each other to seal the fill hole is conical. At the lower portion of the conical section of the snap cap 404 is a ring or a lip 462 that is used to snap the snap cap 404 into place. In this manner, the snap cap 404 is pushed down until it locks into the cap 406. The snap cap 404 has a curved section 472 that abuts against a curved section of the cap thereby stopping the snap cap 404 at that point. The snap cap 404 also engages the cap 406 to form an air space 474 that is adjacent to the vent area. This air space 474 forms a ring, so that regardless of the orientation of the snap cap to the cap, a hollow section is adjacent to the vent area 464 (which is approximately 70 thousandths of an inch or less). Further, the outside diameter of the snap cap 404 is slightly smaller than the inner diameter of the cap 406 so that a small air gap 476 is formed adjacent to the air space 474 to the outside of the dispenser. The air space 474 serves as a path from the vent 460 to the outside atmosphere as well as serving as a buffer between the outside of the dispenser and the vent 460. In an alternative embodiment, the air gap 476 may be used in conjunction with a notch in the side of the cap, as shown in FIG. 4C. This notch allows more air into the air gap 476, in the event that the greater air flow is required. Moreover, the notch may replace the air gap 476, so that the sole means of air flow into the air space 474 is through the notch.

The vent 460 is a hydrophobic vent which allows air to flow through the vent while keeping fluid trapped inside the reservoir chamber 410. The vent is composed of a filter material 466 such as a teflon material with a backing to attach the vent to the cap. The vent opening or area 464, as described previously, is approximately 70 thousandths of an inch. The pressure inside the reservoir chamber 410 is constant, even though the level of reagent may be changing inside the reservoir chamber 410 since air is allowed to flow into the reservoir chamber 410. Moreover, some reagents produce a by-product of gas (called outgassing). In the event that a reagent outgasses, the hydrophobic vent 460 allows gas through the vent 460, thereby avoiding any pressure build-up inside the reservoir chamber 410. In this manner, previous fluid dispensers that required a piston to exert force on the fluid in the reservoir chamber 410 may be removed. The piston in previous designs suffered from several drawbacks. First, certain reagents (such as proteins) may stick to the reservoir chamber, therefore preventing the piston from traveling with the fluid in the reservoir chamber. Additionally, the interaction between the piston and the barrel rely on lubricants. Certain reagents are composed, in part, of detergents and the detergents interfere with the lubrication between the piston and the barrel. Both effects interfere with the performance of the fluid dispenser, thereby giving inconsistent dispensing of fluid. Further, outgassing interacts with the piston either to increase the flow out of the reservoir chamber 410 or to create a compressible air gap between the piston and the main section of the reservoir chamber 410.

Also, certain types of reagents interact with the quad seal 422, causing the quad seal 422 to break down. In order to minimize this interaction, the quad seal 422 is coated with fluorine. Fluorine reacts with the outer layer of the quad seal 422, thereby discouraging reactions with certain types of reagents.

In addition, as shown in FIGS. 4C and 5A, inside the air space 474 is an evaporation ring 405. The evaporation ring 405 is composed of low density polyethylene material manufactured by Whitmark (vendor part number 105060), and is 1/8 inch thick. As discussed previously, the ring acts as a barrier, making it more difficult for air to pass across the vent. In this manner, the ring acts as a restrictor (of air), thereby reducing the amount of evaporation, while still allowing the reservoir chamber 410 to breathe. The ring is a closed cell foam, and is inexpensive in nature. The ring may be composed of any material or foam that acts to restrict the air across the vent area 464. During manufacture of the fluid dispenser, the ring is inserted in between the cap 406 and the snap cap 404. The ring should abut the vent area 464, thereby restricting the air flow across the vent area 464. Moreover, the ring, being composed of cell foam, compresses to fill up the air section 474.

Referring to FIG. 5A, there are protrusions 470 on the inside upper portion of the cap 406 which are used to align the piece of vent material. The vent 460 is therefore centered on top of that upper portion of the cap 406. Referring to FIG. 5B, there is shown an underside view of the vent 460. Included with the vent 460 is a platform 468 for the vent 460, star-shaped in design, which holds the vent 460 flat. When air is passing through the vent 460, particularly when outgassing, the vent 460 has a tendency to flex which may damage the teflon in the vent. In order to minimize flexing of the vent 460, the platform 468 is adjacent to the vent. Therefore, the surface area of the vent may still be relatively large but still have a grid support to stabilize the vent 460 during outgassing. The platform 466 is star-shaped due to ease of molding; however, the shape of the platform may be any design, which supports or stabilizes the vent.

In an alternative embodiment, as shown in FIG. 5C, the vent may be substituted with a bi-directional valve 478 or bi-directional duckbill (or two valves or two duckbills) as another means by which to allow air to flow into and out of the reservoir chamber 410. The bi-directional valve 478 has a bi-directional valve insert 480 for placement of the bi-directional valve 478. The bi-directional valve 478 also has a hydrophobic layer which allows air to flow through the bi-directional valve 478 while keeping fluid trapped inside the reservoir chamber 410. In one direction (air flowing into the reservoir chamber 410), the bi-directional duckbill 478 has a low cracking pressure, in order to equalize the pressure in the reservoir chamber 410 when fluid is dispensed. In the second direction (air flowing out of the reservoir chamber 410), the bi-directional duckbill 478 has a high cracking pressure, in order to alleviate any pressure due to outgassing. The bi-directional duckbill 478 allows air to flow through while keeping fluid trapped inside the reservoir chamber 410. Therefore, the bi-directional duckbill 478 allows air to flow into and out of the reservoir chamber 410 and allows for equalization of the pressure. In practice, a bi-directional duckbill 478 may have less refinement in terms of control when compared to two uni-directional duckbills.

If additional refinement is required, the bi-directional duckbill 478 may be replaced by two uni-directional duckbills, as shown in FIG. 5D. Moreover, when integrating the two unidirectional duckbills, with another uni-directional duckbill at the bottom of the barrel, the system becomes a three duckbill system. In this configuration, the duckbill that releases to atmosphere has the light cracking pressure, the duckbill that allows air into the reservoir chamber has the light cracking pressure, and the duckbill check valve 416 that is down in the barrel has a medium cracking pressure. The duckbill check valve 416 in the barrel should be of a higher cracking pressure than the duckbill releasing air to the atmosphere so that pressure built up in the reservoir should be relieved through the lighter cracking pressure duckbill.

Pressure differentials caused by outflow of fluid from the reservoir chamber 410, as discussed previously, may make the dispensing of fluid difficult. Further, in certain instances, outgassing may not interfere with the operation of the fluid dispenser 400. Therefore, the vent 460 may be substituted with a uni-directional valve or duckbill 482, (made by Vernay in Yellow Springs, Ohio, part number VL-857-101) with a duckbill valve insert 484. In the one direction (air flowing into the reservoir chamber 410), the uni-directional duckbill 482 has a low cracking pressure to alleviate pressure due to outflow of fluid from the reservoir chamber 410. In this embodiment, vent material is not required since the air is flowing only into the reservoir chamber.

In a further embodiment, as shown in FIG. 5E, the vent opening 464 may be reduced to approximately 10 thousandths of an inch (from 70 thousandths of an inch as shown in FIG. 5A). The snap cap 404, for prefilled fluid dispensers, or the flip cap 402, for user fillable fluid dispensers, may also be modified to include a seal 488 where the snap cap 404 or flip cap 402 engages the cap 406. Thus, this alternative embodiment does not have a gap 476 between the snap cap 404 (or flip cap 402) and the cap 406, but instead includes a seal 488. In order for the flow of air into or out of the reservoir chamber 410, there is an opening 486, such as a pin hole or a second vent, placed in the top of the snap cap 404 (or flip cap 402) which is adjacent to the air region 474 formed between the snap cap 404 and the cap 406.

In one embodiment, venting may be accomplished by using a mechanical valve. In one aspect, the mechanical valve comprises at least two pieces: a biasing member and a stem, the biasing member is connected or attached to the stem. In an alternate embodiment, the biasing member and stem form an integral piece. The biasing member and the stem may be comprised of the same material or the biasing member and the stem may be comprised of different materials.

In one embodiment, the mechanical valve operates such that in one position, a hole in the fluid dispenser is sealed, and in another position, the valve does not seal the hole. In one embodiment, in operation, the biasing member of the valve without external mechanical force biases the stem such that at least a portion of the stem seals the hole in the fluid dispenser. By applying a mechanical force to at least a portion of the biasing member, the stem, which is connected to or integral with the biasing member, moves, thereby unsealing the hole in the fluid dispenser. Subsequently, the biasing member, without external force, biases the stem again such that the stem does not seal the hole. Applying mechanical force to at least a portion of the biasing member moves the stem so that at least a portion of the stem seals the hole in the fluid dispenser. In an alternate embodiment, the biasing member without external mechanical force seals the hole in the fluid dispenser so that by applying a mechanical force, at least a portion of the hole is unsealed.

Using an elastomeric mechanical valve (and in one embodiment, an umbrella valve), the reservoir of the fluid dispenser may be sealed. However, in the embodiment where an umbrella valve is used, the umbrella valve is not used in the normal manner as known to those skilled in the art. Umbrella valves are normally used as pressure actuated check valves that seal against flow in one direction and are opened by pressure in the other direction. In the normal manner of umbrella valve usage, the outer flange of the umbrella is urged against a flat sealing surface by the spring force of the deflected umbrella. Fluid pressure on top of the umbrella valve only tends to further seal the flange to its mating seat. The valve is opened by pressure under the umbrella pushing it away from its mating surface, allowing fluid to pass between the flange and its mating sealing surface.

One aspect of the invention makes a mechanical valve out of an umbrella valve, instead of a pressure actuated valve, by using the bulge on the stem, urged against a sharp corner at the end of a hole through which the stem passes as a sealing point. The flange is prevented from sealing by adding slots to its mating surface. The flanged head is used as a disk spring to urge the bulge to seal against it seat, which is opened when the center of the umbrella is deflected downward by the dispenser actuator. The movement of the center of the umbrella downward, or at least a portion of the umbrella downward, pushes the stem and its associated bulge down, uncovering the sealing area, thereby opening the valve and venting the reservoir. An oliophobic vent may be added in series to provide additional safety in preventing liquid from leaking out even if the mechanical vent fails.

Thus, this provides a method and apparatus to modify the pressure in a fluid dispenser. This further provides a method and apparatus that prevents a vacuum from forming in the reservoir chamber of a fluid dispenser while the liquid contained in the dispenser may be pumped out, and at the same time preventing a pressure buildup in the reservoir due to outgassing during the pumping cycle. Moreover, the method and apparatus can prevent liquid from leaving the reservoir through an insert vent that may be placed underneath the mechanical valve of the fluid dispenser. In addition, the method and apparatus can prevent the vapor of an evaporated reagent from leaving the reservoir chamber. Finally, this may eliminate the need for a circuitous path or the use of foam between the vent and the surroundings as has been used in the past.

Referring to Figure 5F, an assembly of a valve 1000 is shown arranged to operate in accordance with one embodiment of the present invention. The valve may take a variety of forms such as an umbrella shape, as shown in Figure 5F, or any other shape consistent with the operations of the mechanical valve. Examples of other forms consistent with the operations of the mechanical valve include, but are not limited to: a spring mechanism, or an elastomeric mechanism. The valve 1000 may have a stem with two portions, either being an integral piece or a series of pieces. The upper portion 1002 of the stem may connect to the head 1008 of the valve 1000. The head 1008 may be a flanged head as shown in Figure 5F. Other forms may include a flat surface, or a non-circular head.

The upper portion 1002 of the stem may be connected to the lower portion 1004 of the stem by a bulge 1006. The lower portion 1004 of the stem may extend below the bulge 1006. The upper portion 1002 of the stem and the lower portion 1004 of the stem may not be the same size, shape, or length. In a preferred embodiment, at least a section of the upper portion 1002 and lower portion 1004 of the stem of the valve 1000 may be cylindrical in shape. The valve 1000 may be entirely made of an elastomeric material with each component interconnected. In another embodiment, at least one of the bulge 1006 or the head 1008 are comprised of an elastomeric material.

In one embodiment, the head 1008 of the valve 1000 may act as a spring force. The head 1008 may be capable of being deflected and re-formed for a purpose of applying a force to the stem portion of the valve 1000. The head 1008 may be comprised of a curved surface. In another embodiment, the head 1008 may have an umbrella shape. The underside of the head 1008 may be comprised of an open space to allow for the deflection of the head 1008. An annular portion 1009 may exist on the underside of head 1008 at the upper end of stem 1002 that acts as a stop for motion of head 1008. The head 1008 may be deflected by pressing down on the top of the head 1008. In a preferred embodiment, the head 1008 may be deflected by pressing down on a center portion of the head 1008. Furthermore, the head 1008 may be deflected by pressing down on the uppermost portion of the head, although those skilled in the art will recognize that the head 1008 may be depressed by applying a force onto any portion of the head 1008. An outer perimeter portion 1010 of the underside of the head 1008 may be substantially flat in order to contact a surface.

The bulge 1006 of the valve 1000 may be of a spherical shape. Other forms may include an oblong shape or an elliptical shape. In one embodiment, the bulge 1006, the upper portion 1002 of the stem, and the lower portion 1004 of the stem may be one integral piece. In another embodiment, the bulge 1006 may be a separate piece of the valve 1000 connected to the upper portion 1002 and the lower portion 1004 of the stem. In one embodiment, the bulge 1006 may have a larger diameter than the upper portion 1002 of the stem. In another embodiment, the bulge 1006 may have a larger diameter than the lower portion 1004 of the stem. At least a section of the lower portion 1004 of the stem may have a diameter that decreases in distance from the bulge 1006. This may allow for the valve 1000 to be easily placed into holes or small areas since at least a section of the lower portion 1004 of the stem may have a conical shape.

Referring to Figure 5G, a cap 2000 of a fluid dispenser is shown arranged to operate in accordance with one embodiment of the present invention. The cap 2000 may be mounted on top or on the side of a fluid dispenser. The cap 2000 may have a sealing surface 2016 which may seal the cap 2000 with the fluid dispenser. The cap may be comprised of a plastic material, or another rigid material. The sealing surface 2016 may have a ridge 2017 which may fit tightly into the fluid dispenser. A hole 2004 may be present in the cap 2000. The hole 2004 may be placed at any position on the cap 2000. In the preferred embodiment, the hole 2004 is placed in the center of the cap 2000. The bottom corner 2010 of the hole 2004 should preferably have a small radius (*e.g.,* 0.002 inch), so that the bottom corner 2010 is sharp.

The cap 2000 may have a surface 2002 that mates with the head 1008 of the valve 1000. The surface 2002 may be raised from the hole 2004 by a small amount in order to provide an area for the head 1008 of the mechanical valve 1000 to be deflected into, as discussed above. The surface 2002 may have cuts, such as cut 2008, breaks, or passageways for air through the surface 2002 so that gas and/or vapor may always pass underneath the head 1008 of the valve 1000. The cuts may act as breaks or trenches for air. Moreover, the cuts may be of any shape and any size large enough to allow air to pass through. The cuts may be positioned in order to always allow air to pass through, even when valve 1000 is inserted into the cap 2000. Air may only pass through the hole 2004, and subsequently through the breaks or cut 2008, when the valve 1000 is depressed or open.

A small protective ridge 2006 may surround the surface 2002 and the head 1008 of the valve 1000. The protective ridge 2006 may be raised from the surface 2002 of the cap 2000. The protective ridge 2006 may provide an outer perimeter for the head 1008 of the valve 1000 to be placed. The protective ridge 2006 may be raised an amount equal to the thickness of an outer edge 1005 of the valve in order to provide a secure housing for placement of the valve 1000. The cut 2008 may pass through the protective ridge 2006 in order to allow for a passageway for air.

An inner circular wall 2012 and an outer circular wall 2014 may mate to an insert vent 4000, as will be described later. The inner circular wall 2012 and the outer circular wall 2014 may extend below the hole 2004 of the cap 2000. The inner circular wall 2012 and the outer circular wall 2014 may be thin and may be separated by a distance substantially equal to the thickness of the insert vent 4000 housing. The outer circular wall 2012 may extend directly below the protective ridge 2006 of the cap 2000. The inner circular wall 2012 and the outer circular wall 2014 may have a length substantially equal to the length of the stem of the mechanical valve 1000. The outer circular wall 2014 and the inner circular wall 2012 may be comprised of the same material as the cap 2000 of the fluid dispenser. Alternatively, the outer circular wall 2014 and the inner circular wall 2012 may be comprised of a different material than the cap 2000.

In one embodiment, the cap 2000 may contain a fastener member 2018 on each side of the cap 2000. In a preferred embodiment, two fastener members 2018 are placed on the cap 2000, but those skilled in the art will recognize that any desired number of fastener members 2018 may be present. The fastener member(s) 2018 may be placed directly across from one another. The fastener member(s) 2018 may hold the cap 2000 in place on the fluid dispenser. The fastener member(s) 2018 may be shaped to allow the cap 2000 to slide into the fluid dispenser and click into place, but not slide out. The fastener member(s) 2018 may have a smooth surface which allows the cap 2000 to slide into the fluid dispenser. The fastener member(s) 2018 may lock onto a ridge of the fluid dispenser upon placement of the cap 2000 into the fluid dispenser.

Referring to Figure 5H, a cap 2000 with the valve 1000 installed is illustrated arranged to operate in accordance with one embodiment of the present invention. The bulge 1006 on the stem of the valve 1000 may mate with the bottom corner 2010 of the hole 2004. The bulge 1006 may be urged against the bottom corner 2010 of the hole 2004 to form a seal to the hole 2004 by the spring tension of the head 1008 of the valve 1000. The force from the head 1008 of the valve 1000 may be transmitted to the bulge 1006 by the upper portion 1002 of the stem. The upper portion 1002 of the stem may pass through the hole 2004 in the cap 2000. The hole 2004 may be slightly larger than the diameter of the stem, so that vapor or gas may pass through the hole 2004 if the bulge 1006 is not sealed against the hole 2004. The bulge 1006 may be slightly larger than the hole 2004, so that the bulge 1006 may seal to the bottom corner 2010 of the hole 2004.

In one embodiment, upon urging the bulge 1006 against the bottom corner 2010 of the hole 2004, the bulge 1006 may form a seal that prevents gas, vapor and/or liquid from exiting a reservoir chamber of the fluid dispenser. The bulge 1006 may be biased by a biasing member, such as head 1008, used to seal the hole 2004 of the cap 2000. The bulge 1006 may become compressed upon urging the bulge 1006 against the bottom corner 2010 of the hole 2004. This may occur because the bulge 1006 may be comprised of an elastomeric material. If the pressure in the reservoir increases so that the pressure is higher than the surrounding atmosphere, the pressure may cause the bulge 1006 to seal more tightly than before. As shown in Figure 16H, an o-ring 3000 may be provided to aid in the sealing of the cap 2000 to the fluid dispenser. The o-ring 3000 may be comprised of an elastomeric material in order to allow for the cap 2000 to tightly fit into the fluid dispenser. The o-ring may 3000 may become compressed upon inserting the cap 2000 into a fluid dispenser.

As shown in Figure 5H, an insert vent 4000 may be placed underneath the valve 1000. The housing of insert vent 4000 may fit between the inner circular wall 2012 and the outer circular wall 2014. Specifically, the housing of the insert vent 4000 may slide between the inner circular wall 2012 and the outer circular wall 2014 and fit tightly to disallow air, vapor, or liquid to pass through the vent. The insert vent 4000 may be any shape, preferably of a circular shape to conform to the shape of the cap 2000 for the fluid dispenser. The insert vent 4000 may be placed underneath the valve 1000 at a distance great enough to allow for an open space between the insert vent 4000 and the valve 1000. The insert vent 4000 may also contain an oliophobic vent 4004 in the center of the insert vent 4000 as an added safety feature.

Referring to Figure 5I, an insert vent 4000 is shown in accordance with an embodiment of the present invention. An exemplary insert vent found suitable for use in the cap 2000 of the fluid dispenser is one made and sold by W.L. Gore & Associates, and having model number D10, although those skilled in the art will recognize that any insert vent with similar characteristics would also be suitable. The insert vent 4000 may have an oliophobic vent 4004 attached to one end. The oliophobic vent 4004 does not allow liquid to pass through. The oliophobic vent 4004 may connect to a plastic cylinder 4002. The oliophobic vent 4004 may be placed on one end of the housing of the insert vent 4000. The insert vent 4000 may mate to an inner circular wall 2012 and an outer circular wall 2014 of the cap 2000 as shown in Figure 16H. The inner circular wall 2012 and the outer circular wall 2014 may allow the insert vent 4000 to fit tightly into the cap 2000. The insert vent 4000 may act as an added safety feature for the venting of the fluid dispenser, or as an added liquid barrier for the cap 2000 of the fluid dispenser. The insert vent 4000 may allow air to pass through in order to modify the pressure in the reservoir chamber of the fluid dispenser, but the insert vent 4000 may not allow liquid to pass through thereby creating a liquid barrier.

Referring to Figure 16J, a side view of the valve 1000 inserted into the cap 2000 is illustrated arranged to operate in accordance with one embodiment of the present invention. The top 5000 of the fluid dispenser is positioned horizontally with reference to the fluid dispenser. In an alternate embodiment, the cap 2000 may be positioned vertical with reference to the fluid dispenser. One cut 2008 underneath the valve 1000 is shown at surface 2002 with protective ridge 2006. In a preferred embodiment, four cut are provided for passageways for air to vent the reservoir of the fluid dispenser. The cut may be equally spaced around the surface 2002. The insert vent 4000 is shown inserted between the inner circular wall 2012 and the outer circular wall 2014 of the cap 2000. The oliophobic vent 4004 is shown placed at one end of the insert vent 4000. The oliophobic vent 4004 may be a thin membrane inserted between the outer and inner housing of the insert vent 4000.

As shown in Figure 5J, the valve 1000 may fit into the cap 2000 in order to provide for a match with the surface 2002 of the cap 2000. A space 5002 inside the inner circular wall 2012 of the cap 2000 may be open to allow for air to pass through as shown. The insert vent 4000 may be placed underneath the valve 1000 at a distance so as not to touch the valve 1000. A space or a small distance may be present between the oliophobic vent 4004 of the insert vent 4000 and the valve 1000 to allow for the valve 1000 to be pressed downward. The small distance available between the oliophobic vent 4004 and the lower portion of the stem 1004 is substantially the amount of distance that the bulge 1006 may be displaced in order to allow air to pass underneath the mechanical valve 1000.

The fluid in a fluid dispenser may be dispensed by movement of the barrel. An example of a barrel is shown in Figure 1A. Referring to figure 5K, the fluid dispenser may be placed into a machine with a plunger 6000, or other means of applying force, to press down upon the barrel of the fluid dispenser. When pushing on the barrel, the plunger 6000 may contact the cap 2000 of the fluid dispenser. Thus, the plunger 6000 of the machine may mechanically open the valve 1000 as shown in Figure 5K. When the plunger 6000 on the machine contacts the fluid dispenser, the plunger 6000 may first contact the top of the head 1008 of the valve 1000 which is inserted into the cap 2000. Any portion of the head 1008 may be contacted. In one embodiment, the plunger 6000 contacts the center of the head 1008 of the valve 1000 exerting a mechanical force on the head 1008. This mechanical force in the direction perpendicular to the head 1008 depresses the head 1008 downward. When the head 1008 of the valve 1000 is pressed down, this displaces the stem and its associated bulge 1006 as shown in Figure 5K. The top of head 1008 is displaced downward until flush with protective ridge 2006 where plunger 6000 then contacts protective ridge 2006.

In one embodiment, the head 1008 of the valve 1000 may be deflected downward because the head 1008 is made of an elastomeric material. The head 1008 may be deflected downward until the plunger 6000 contacts protective ridge 2006. The contact of the annular portion 1009 of the head 1008 with the surface 2002 does not prevent air from passing underneath the valve 1000. Since the head 1008 of the valve 1000 may be positioned on top of the surface 2002 of the cap 2000, air may be able to pass underneath the valve 1000 through the cuts. The cuts on the surface 2002 allow for passageways for air to pass underneath the valve 1000. The valve 1000 contacts the surface 2002 upon mechanically opening the valve 1000, but the cut are made in the surface 2002, and thus allow for air to pass underneath the valve 1000.

Upon deflection of the head 1008, the head 1008 exerts a force onto the stem portion of the valve 1000. The upper portion 1002 of the valve 1000 may transmit the force from the head 1008 onto the bulge 1006 which displaces the bulge 1006 from the hole 2004. Once the bulge 1006 is displaced from the hole 2004, the valve 1000 will be open as shown in Figure 5K. Since the hole 2004 is of a smaller diameter than the stem of the valve 1000, a space may be present between the upper portion 1002 of the stem and the outer area of the hole 2004. This may allow for the pressure in the reservoir to equilibrate with that of the surrounding atmosphere by allowing air to pass through the space 6004 between the upper portion 1002 of the stem and the outer area of the hole 2004, and subsequently pass through the cut.

The cut on the surface 2002 of the cap 2000 allow for a passageway of free communication of air between the outer atmosphere and the inside of the reservoir chamber when the bulge 1006 is displaced from the hole 2004. Air may pass through the cut underneath the valve 1000 because of a pressure differential between the inside of the reservoir chamber and the outside of the reservoir chamber. The air will move from a region of higher concentration of pressure to a region of a lower concentration of pressure. In one embodiment, the pressure inside the fluid dispenser may be higher than the pressure on the outside of the fluid dispenser. In another embodiment, the pressure inside the fluid dispenser may be lower than the pressure on the outside of the fluid dispenser. Air may pass out of the fluid dispenser until the pressure inside the fluid dispenser is equal to the pressure outside the fluid dispenser.

The seal of the bulge 1006 against the hole 2004 may be re-formed to disallow air to pass underneath the valve 1000 upon removing the plunger 6000 from the top of the head 1008 of the valve 1000. Once the plunger 6000 is removed by the machine, the head 1008 may not be deflected, and the head 1008 may slowly re-form due to the stored potential spring energy of the head 1008 of the valve 1000 and pull the upper potion 1002 and the lower portion 1004 of the stem of the valve 1000 upward a small distance. When the stem is moved upward, the bulge 1006 may move upward as well. The bulge 1006 may then become pressed against the hole 2004 of the cap 2000 and form a tight seal. A portion of the stem may become compressed upon moving the stem upward. Moreover, the bulge 1006 may become compressed as well upon pressing the bulge 1006 against the hole 2004 to form a tight seal.

Using the elastomeric valve 1000 may seal the reservoir of the fluid dispenser. In one embodiment, a requirement of a valve is for the valve to have a dual-purpose vent. The first purpose is to allow air to pass into the reservoir to prevent a vacuum from forming as liquid is removed. The second purpose of the vent is to allow any internal pressure that might build up inside the reservoir to equilibrate with ambient pressure before the first dispense. Internal pressure is not in itself a substantial problem. However, internal pressure may not be tolerated when the dispenser is actuated, as the pressure would expel too large of a volume of liquid. The valve 1000 provides a manner of sufFciently venting the fluid dispenser.

Referring to FIG. 6A, there is shown a cutaway view of the lower portion of the barrel 408, duckbill check valve 416, duckbill check valve insert 414, quad seal 422, ball 426, ball check valve insert 424 and coupler 428 of a fluid dispenser 400. The barrel 408 has protrusions 408A, which mate with the coupler in order to, maintain the position of the barrel 408 on the upstroke. Otherwise, if the spring pushes the barrel 408 upward too high, the seal, as provided by the quad seal 422, may be broken thereby creating an air path and causing the fluid dispenser 400 to lose prime. The barrel 408 also has a flange 408B which mates with the stop 420 on the downstroke. The barrel 408 also has a pocket 408C, where the duckbill check valve insert 414 is inserted. This pocket acts as a funnel so that no puddles are formed at the bottom of the barrel 408 at the interaction point with the duckbill check valve 416 or duckbill check valve insert 414, thereby minimizing waste. The barrel 408 also has at its lower portion a piston 454 by which fluid is expelled in the dispenser 400. At the lower portion of FIG. 6A is a nozzle cap 458 for engagement with the nozzle 430 of the coupler 428. The nozzle cap 454 and nozzle 430 are matched using a luer fitting design in order to be a fluid tight seal. Referring to FIG. 6B, there is shown a cutaway view of the lower portion of the barrel, duckbill check valve, and duckbill check valve insert of a fluid dispenser. Referring to FIG. 6C, there is shown a cutaway view of the quad seal of a fluid dispenser.

FIG. 6A also shows a cutaway view of the coupler 428. The coupler 428 has grooves 428B in which the ball check valve insert 424 snaps. The grooves 428B act to prevent any leakage of fluid downward or air upward through the walls of the ball check valve insert 424 and the coupler wall. The coupler 428 also has protrusions 428C, which ensure that the dispenser is aligned on the reagent tray 10. For example, if the dispenser is misaligned, the dispense cylinder may not engage the dispenser properly. The coupler also has stabilizing bumps 428D, which reduce any rocking back and forth of the fluid dispenser 400.

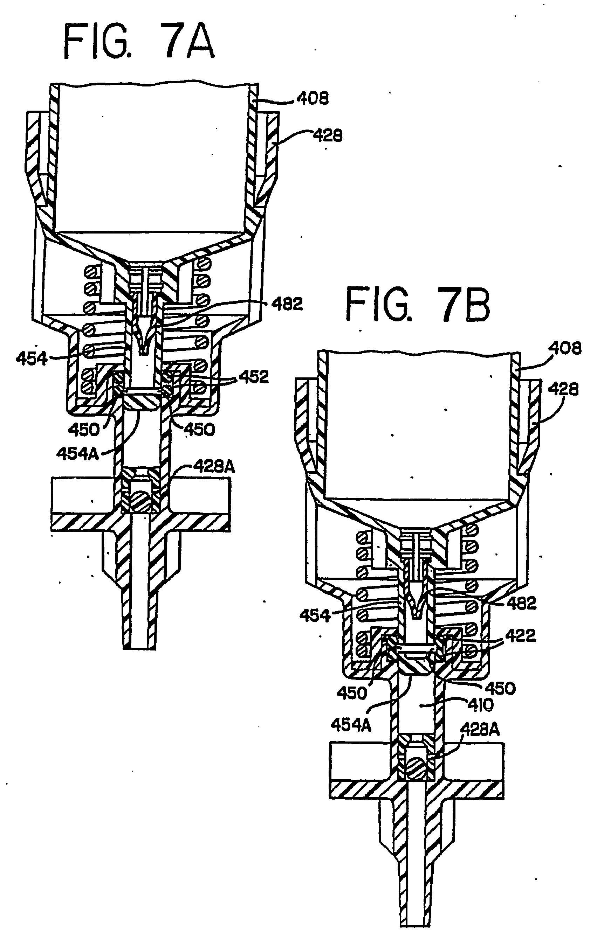

Further, in an alternative embodiment as shown in FIG. 7A, there is shown a barrel 408 which has a lower section which acts as a piston 454 at its lower end, similar to FIGS. 1A-1C. Instead of a throughhole at the bottom of the piston 454 at the lower section of the barrel in the piston area, there are holes 450 in the side of the piston 454 that contact O-ring seals 452. In this manner, when the barrel 408 is pushed downward, the holes 450 are exposed, dispensing fluid from the reservoir chamber 410. When the barrel is returning to the up position, the pressure differential is such that the duckbill check valve 482 opens and fills the dispense chamber 410 with fluid. Because of the lack of a high pressure differential on the upstroke of the barrel, the duckbill check valve 482 in FIG. 7A is a duckbill check valve of low cracking pressure. Further, when the barrel is in the up position, the end of the piston 454A is closed by the O-ring seals 452 thereby sealing the bottom of the barrel 408 except for the holes 450.

Referring to another alternative embodiment as shown in FIG. 7B, there is shown a barrel 408 which has a lower section which acts as a piston 454 at its lower end, similar to FIG. 7A. Instead of placing O-ring seals 452 to cover the hole 450 in the lower end of the piston 454A, a quad seal 422, similar to the quad seal used in FIGS. 3A and 3B, is used.

Referring to FIG. 9, there is shown an alternative embodiment of a cutaway view of the lower portion of the fluid dispenser with a cup check valve 792. The lower portion of the cup check valve 792 (i.e., the cup piece 794) abuts against the piston 454 of the barrel 408, thereby disallowing liquid to pass through the lower portion of the barrel 408. The upper portion of the cup check valve 792, which is composed of an upper ledge 800 and side walls 802, abuts against the duckbill check valve insert 414 and the side of the piston 454. The cup check valve 792 operates in a manner similar to the duckbill check valve 416, as shown in FIG. 6A in that it operates based on a pressure differential. During the downstroke of the barrel 408, the cup piece 794 of the cup check valve 792 remains rigid so that the piston, and the cup piece, push the liquid out of the dispense chamber 412. During the upstroke of the barrel 408, the ball 434 in the ball chamber 432 seats against the check valve ball insert 424, as described in FIG. 2A, creating a vacuum in the dispense chamber. This vacuum creates a pressure in the dispense chamber and in the adjacent piston area of the barrel 408, causing the cup piece 794 of the cup check valve 792 to flex inward, so that the cup piece 794 does not abut against the piston 454. When this occurs, fluid in the reservoir chamber is allowed to pass around the cup check valve 792 and into the dispense chamber. The cup piece 794 is flexed inward until the pressure equalizes between the dispense chamber and reservoir chamber. As such, the dispense chamber receives fluid on the upstroke of the barrel 408. For better flexing effect due to the vacuum caused in the dispense chamber, the cup piece 794 of the cup check valve 792 should sit low in the piston 454 of the barrel 408. In this manner, the less area under the cup, the more suction effect caused by the vacuum.

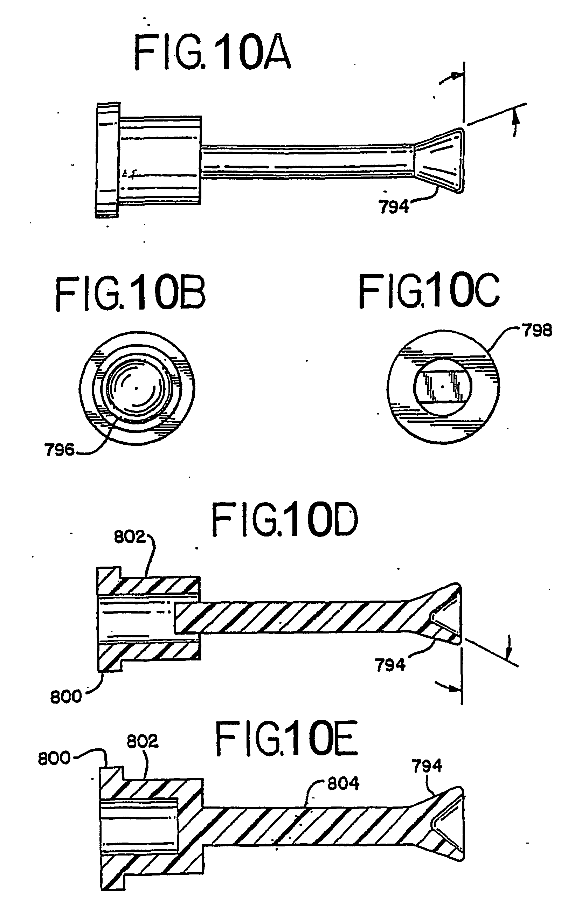

Referring to FIG. 10A, there is shown a side view of the cup check valve 792. The cup piece 794 spreads outward at angle of approximately 71° from the horizontal. However, the cup piece 794 may be curved outward or inward, depending on the flexing needs of the cup piece 794. Moreover, the upper ledge 800 and side walls 802 are formed to abut against the duckbill check valve insert 414 and the side of the piston 454. This upper piece may be of such a form in order to be held securely in place.

Referring to FIG. 10B, there is shown a bottom view of the cup check valve 792. The bottom 796 is round, in order to abut the round sidewalls of the piston 454. The bottom of the cup check valve 792 may be any shape that forms against the surface abutting it, in this case, the piston 454.

Referring to FIG. 10C, there is shown a top view of the cup check valve 792. The top 798 is round, in order to abut the round sidewalls of the duckbill check valve insert 414. The top of the cup check valve 792 may be any shape that forms against the surface abutting it, in this case, the duckbill check valve insert 414.

Referring to FIGS. 10D and 10E, there are shown views of the cup check valve 792 at cross-sections A-A and B-B in FIG. 10C respectively. The cup piece 794 of the cup check valve 792 is forked for ease of flexing. The thickness and shape of the cup piece 794 may be varied depending on the flexing needs of the cup piece. Further, the connecting piece 804 may be any shape that connects the upper piece of the cup check valve 792 to the cup piece 794. In the preferred embodiment, the connecting piece 804 is cylindrical so as not to interfere with the flow of fluid through the piston 454.

From the foregoing detailed description, it will be appreciated that numerous changes and modifications can be made to the aspects of the invention without departure from the scope of the invention. This scope of the invention is defined by the appended claims, to be interpreted in light of the foregoing specification.

## Claims

1. A fluid dispenser comprising in combination:
a barrel (408) having a cap, the cap (2000) having a surface with at least one hole (2004); and
a valve (1000) having a biasing member (1008) and a hole sealer (1006), the biasing member (1008) having at least two positions,
wherein in a first position of the biasing member (1008), the hole sealer (1006) seals the hole (2004) and wherein in a second position, the hole sealer does not seal the hole (2004),
wherein a force places the biasing member (1008) in at least one of the two positions, and wherein
the biasing member (1008) is an umbrella shaped biasing member (1008) with a flat surface (1010), the periphery of the flat surface (1010) contacting the cap (2000), **characterized in that**
said cap (2000) further comprises a passageway from the hole to the outside the fluid dispenser including one or more breaks (2008), said breaks (2008) abutting at least a portion of the flat surface (1010) of the umbrella shaped biasing member (1008).

2. The fluid dispenser of claim 1, wherein the hole sealer (1006) is a bulge substantially spherical in shape.

3. The fluid dispenser of one of the preceding claims, wherein the breaks (1008) provide a fluid path.

4. The fluid dispenser of one of the preceding claims, further comprising a vent (4000) inside the barrel (408).

5. The fluid dispenser of Claim 4, wherein the vent (4000) comprises an oliophobic material (4004).

6. The fluid dispenser of Claim 4 or 5, wherein the barrel (408) comprises a reservoir chamber (410) and wherein the vent (4000) allows air into the reservoir chamber (410).

7. The fluid dispenser of one of the preceding claims, wherein at least a portion of the valve (1000) is comprised of an elastomeric material.

8. The fluid dispenser of one of the preceding claims, wherein the force is mechanical.

9. A method of equilibrating pressure within a fluid dispenser the steps of:
providing the fluid dispenser of one of claims 1 to 8,
placing the biasing member (1008) in one of the two positions by applying a force to the valve (1000),
wherein in a first position of the biasing member (1008), the hole sealer (1006) seals the hole (2004) and wherein in a second position, the hole sealer (1006) does not seal the hole (2004).

10. The method of Claim 9, wherein the force places the biasing member (1008) in the second position.

11. The method of Claim 9 or 10, wherein the force places the biasing member (1008) in the first position.

12. The method of anyone of Claims 9 to 11, wherein the biasing member (1008) is a shaped surface with a top, and wherein the mechanical force is applied at the top.

13. The method of anyone of Claims 9 to 12, to , further comprising providing a passageway for air between inside and outside of the barrel when the barrel (408) is in the second position.

14. The method of anyone of Claims 9 to 13, wherein the barrel includes a reservoir chamber (490), and wherein the fluid dispenser further comprises a vent (4000) inside the barrel, and wherein the vent (4000) allows air into the reservoir chamber (410).

15. The method of anyone of Claims 9 to 14, wherein placing the biasing member (1008) in one of the two positions includes applying a mechanical force.

16. A method of mechanically operating the valve for a fluid dispenser of anyone of claims 1 to 8, the valve (1000) further including a head (1008) and a bulge (1006), the method comprising the steps of:
abutting the bulge (1006) against the hole (2004) in the fluid dispenser cap (2000) to create a seal;
applying a mechanical force to move the head (1008) so that the bulge (1006) does not abut the hole (2004); and
reducing the mechanical force so that the bulge (1006) abuts the hole (2004).

17. The method of Claim 16, wherein the head (1008) includes a biasing member and wherein the step of abutting is performed by the biasing member.

18. The method of Claim 16, or 17, wherein the step of reducing the mechanical force includes removing the mechanical force thereby creating the seal between the bulge (1006) and the hole (2004).

19. The method of anyone of Claims 15 to 18, wherein the head (1008) has a center portion, and wherein the mechanical force is applied to the center portion of the head (1008).

20. The method of anyone of Claims 16 to 19, wherein the step of applying a mechanical force to the head (1008) creates an opening between the bulge (1006) and the hole (2004) to allow a passageway between inside the fluid dispenser (408) and outside the fluid dispenser (408).

21. The method of anyone of Claims 16 to 20, wherein the barrel includes a reservoir chamber (410), and wherein the fluid dispenser further comprises a vent (4000) inside the barrel, and wherein the vent allows air into the reservoir chamber (410).

22. The method of Claim 21, wherein the vent (4000) prevents liquid from leaving the reservoir chamber (410).

## Patentansprüche

1. Flüssigkeitsspender bzw. Fluidabgabevorrichtung, umfassend in Kombination:
eine Trommel bzw. Hülse bzw. Zylinder (408) mit einer Abdeckung bzw. Kappe, wobei die Abdeckung (2000) eine Fläche bzw. Oberfläche mit wenigstens einem Loch (2004) aufweist; und
ein Ventil (1000), das ein beaufschlagendes bzw. Vorspannglied (1008) und eine Lochabdichteinrichtung (1006) aufweist, wobei das Vorspannglied (1008) wenigstens zwei Positionen aufweist,
wobei in einer ersten Position des Vorspannglieds (1008) die Lochabdichteinrichtung (1006) das Loch (2004) abdichtet und wobei in einer zweiten Position die Lochabdichteinrichtung das Loch (2004) nicht abdichtet,
wobei eine Kraft das Vorspannglied (1008) in wenigstens einer der zwei Positionen anordnet und wobei
das Vorspannglied (1008) ein schirmförmiges Vorspannglied (1008) mit einer ebenen bzw. flachen Fläche bzw. Oberfläche (1010) ist, wobei der Umfang der flachen Oberfläche (1010) die Kappe (2000) kontaktiert, **dadurch gekennzeichnet, daß**
die Kappe (2000) weiterhin einen Durchtritt aus dem Loch zu dem Äußeren der Fluidabgabevorrichtung aufweist, die ein oder mehrere Unterbrechungen (2008) aufweist, wobei die Unterbrechungen bzw. Spalten bzw. Öffnungen bzw. Durchbrüche (2008) an wenigstens einem Abschnitt der ebenen Fläche bzw. Oberfläche (1010) des schirmförmigen Vorspannglieds (1008) anliegt bzw. anschlagen.

2. Fluidabgabevorrichtung nach Anspruch 1, wobei die Lochabdichteinrichtung (1006) eine Ausbauchung bzw. Wölbung ist, die im wesentlichen kugelförmig in der Form ist.

3. Fluidabgabevorrichtung nach einem der vorhergehenden Ansprüche, wobei die Unterbrechungen (1008) einen Fluidpfad zur Verfügung stellen.

4. Fluidabgabevorrichtung nach einem der vorhergehenden Ansprüche, weiterhin umfassend eine Belüftung (4000) im Inneren der Trommel (408).

5. Fluidabgabevorrichtung nach Anspruch 4, wobei die Belüftung (4000) ein oliophobes Material (4004) umfaßt.

6. Fluidabgabevorrichtung nach Anspruch 4 oder 5, wobei die Trommel (408) eine Reservoirkammer (410) umfaßt und wobei die Belüftung (4000) Luft in die Reservoirkammer (410) einläßt.

7. Fluidabgabevorrichtung nach einem der vorhergehenden Ansprüche, wobei wenigstens ein Abschnitt des Ventils (1000) aus einem elastomeren Material besteht.

8. Fluidabgabevorrichtung nach einem der vorhergehenden Ansprüche, wobei die Kraft mechanisch ist.

9. Verfahren zum Vergleichmäßigen bzw. Ausgleichen eines Drucks innerhalb einer Fluidabgabevorrichtung mit den Schritten:
Bereitstellen einer Fluidabgabevorrichtung nach einem der Ansprüche 1 bis 8,
Anordnen des beaufschlagenden bzw. Vorspannglieds (1008) in einer der zwei Positionen durch ein Anwenden bzw. Anlegen einer Kraft auf das Ventil (1000),
wobei in einer ersten Position des Vorspannglieds (1008) die Lochabdichteinrichtung (1006) das Loch (2004) abdichtet und wobei in einer zweiten Position die Lochabdichteinrichtung (1006) das Loch (2004) nicht abdichtet.

10. Verfahren nach Anspruch 9, wobei die Kraft das Vorspannglied (1008) in der zweiten Position anordnet.

11. Verfahren nach Anspruch 9 oder 10, wobei die Kraft das Vorspannglied (1008) in der ersten Position anordnet.

12. Verfahren nach einem der Ansprüche 9 bis 11, wobei das Vorspannglied (1008) eine geformte Fläche bzw. Oberfläche mit einer Oberseite ist, und wobei die mechanische Kraft auf der Oberseite aufgebracht bzw. angewandt wird.

13. Verfahren nach einem der Ansprüche 9 bis 12, weiterhin umfassend ein Bereitstellen eines Durchtritts für Luft zwischen dem Inneren und dem Äußeren der Trommel, wenn sich die Trommel (408) in der zweiten Position befindet.

14. Verfahren nach einem der Ansprüche 9 bis 13, wobei die Trommel eine Reservoirkammer (410) beinhaltet, und wobei die Fluidabgabevorrichtung weiterhin eine Belüftung (4000) im Inneren der Trommel umfaßt, und wobei die Belüftung (4000) Luft in die Reservoirkammer (410) einläßt.

15. Verfahren nach einem der Ansprüche 9 bis 14, wobei ein Anordnen des Vorspannglieds (1008) in einer der zwei Positionen ein Anlegen einer mechanischen Kraft umfaßt.

16. Verfahren zum mechanischen Betätigen des Ventils für eine Fluidabgabevorrichtung nach einem der Ansprüche 1 bis 8, wobei das Ventil (1000) weiterhin einen Kopf (1008) und eine Ausbauchung bzw. Wölbung (1006) beinhaltet, wobei das Verfahren die Schritte umfaßt:
Anschlagen der Ausbauchung (1006) gegen das Loch (2004) in der Fluidabgabekappe (2000), um eine Dichtung auszubilden;
Anlegen bzw. Anwenden einer mechanischen Kraft, um den Kopf (1008) so zu bewegen, daß die Ausbauchung (1006) nicht an dem Loch (2004) anschlägt; und
Reduzieren der mechanischen Kraft, so daß die Ausbauchung (1006) an dem Loch (2004) anschlägt bzw. anliegt.

17. Verfahren nach Anspruch 16, wobei der Kopf (1008) ein Vorspannglied beinhaltet und wobei der Schritt eines Anschlagens durch das Vorspannglied ausgeführt ist.

18. Verfahren nach Anspruch 16 oder 17, wobei der Schritt eines Reduzierens der mechanischen Kraft ein Entfernen der mechanischen Kraft beinhaltet, wodurch die Dichtung zwischen der Ausbauchung (1006) und dem Loch (2004) erzeugt wird.

19. Verfahren nach einem der Ansprüche 15 bis 18, wobei der Kopf (1008) einen zentralen Abschnitt aufweist, und wobei die mechanische Kraft auf den zentralen Abschnitt des Kopfs (1008) aufgebracht wird.

20. Verfahren nach einem der Ansprüche 16 bis 19, wobei der Schritt eines Anlegens bzw. Aufbringens einer mechanischen Kraft auf den Kopf (1008) eine Öffnung zwischen der Ausbauchung (1006) und dem Loch (2004) bewirkt, um einen Durchtritt zwischen dem Inneren der Fluidabgabevorrichtung (408) und dem Äußeren der Fluidabgabevorrichtung (408) auszubilden.

21. Verfahren nach einem der Ansprüche 16 bis 20, wobei die Trommel eine Reservoirkammer (410) beinhaltet und wobei die Fluidabgabevorrichtung weiterhin eine Belüftung (4000) im Inneren der Trommel umfaßt, und wobei die Belüftung Luft in die Reservoirkammer (410) einläßt.

22. Verfahren nach Anspruch 21, wobei die Belüftung (4000) Flüssigkeit am Austreten aus der Reservoirkammer (410) hindert.

## Revendications

1. Distributeur de fluide comprenant de manière combinée :
- un corps (408) possédant un bouchon, le bouchon (2000) ayant une surface avec au moins un trou (2004) ; et
- une valve (1000) possédant un élément de sollicitation (1008) et un obturateur de trou (1006), l'élément de sollicitation (1008) ayant au moins deux positions,
dans lequel dans une première position de l'élément de sollicitation (1008), l'obturateur de trou (1006) bouche le trou (2004) et dans lequel dans une deuxième position, l'obturateur de trou ne bouche pas le trou (2004),
dans lequel une force place l'élément de sollicitation (1008) dans au moins l'une des deux positions
et dans lequel l'élément de sollicitation (1008) est un élément de sollicitation en forme de parapluie avec une surface plane (1010), le pourtour de la surface plane (1010) entrant en contact avec le bouchon (2000),
**caractérisée en ce que**
ledit bouchon (2000) comprend en outre un passage du trou vers l'extérieur, le distributeur de fluide comprenant une ou plusieurs cassures (2008), lesdites cassures (2008) s'appuyant sur au moins une partie de la surface plane (1010) de l'élément de sollicitation en forme de parapluie (1008).

2. Distributeur de fluide selon la revendication 1, dans lequel l'obturateur de trou (1006) est un renflement de forme sensiblement sphérique.

3. Distributeur de fluide selon l'une des revendications précédentes, dans lequel les cassures (1008) fournissent un trajet de fluide.

4. Distributeur de fluide selon l'une des revendications précédentes, comprenant en en outre un évent (4000) à l'intérieur du corps (408).

5. Distributeur de fluide selon la revendication 4, dans lequel l'évent (4000) comprend un matériau oléophobe (4004).

6. Distributeur de fluide selon la revendication 4 ou 5, dans lequel le corps (408) comprend une chambre de réservoir (410) et dans lequel l'évent (4000) permet à de l'air d'entrer dans la chambre de réservoir (410).

7. Distributeur de fluide selon l'une des revendications précédentes, dans lequel au moins une partie de la valve (1000) est constituée d'un matériau élastomère.

8. Distributeur de fluide selon l'une des revendications précédentes, dans lequel la force est mécanique.

9. Procédé d'équilibrage de pression à l'intérieur du distributeur de fluide comprenant les étapes consistant à :fournir le distributeur de fluide selon l'une
des revendications 1 à 8.placer l'élément de sollicitation (1008) dans l'une
des deux positions en exerçant une force sur la valve (1000),dans lequel dans une première position de l'élément de sollicitation (1008), l'obturateur de trou (1006) bouche le trou (2004) et dans lequel dans une deuxième position, l'obturateur de trou (1006) ne bouche pas le trou (2004).

10. Procédé selon la revendication 9, dans lequel la force place l'élément de sollicitation (1008) dans la deuxième position.

11. Procédé selon la revendication 9 ou 10, dans lequel la force place l'élément de sollicitation (1008) dans la première position.

12. Procédé selon l'une quelconque des revendications 9 à 11, dans lequel l'élément de sollicitation (1008) est une surface façonnée avec un sommet, dans laquelle la force mécanique est exercée au sommet.

13. Procédé selon l'une quelconque des revendications 9 à 12, comprenant en outre la fourniture d'un passage pour de l'air entre l'intérieur et l'extérieur du corps lorsque le corps (408) est dans la deuxième position.

14. Distributeur de fluide selon l'une quelconque des revendications 9 à 13, dans lequel le corps comporte une chambre de réservoir (410) et dans lequel le distributeur de fluide comprend en outre un évent (4000) à l'intérieur du corps, et dans lequel l'évent (4000) permet à de l'air d'entrer dans la chambre de réservoir (410).

15. Procédé selon l'une quelconque des revendications 9 à 14, dans lequel le fait de placer l'élément de sollicitation (1008) dans l'une des deux positions comporte l'application d'une force mécanique.

16. Procédé consistant à faire fonctionner mécaniquement la valve pour un distributeur de fluide selon l'une quelconque des revendications 1 à 8, la valve (1000) comportant en outre une tête (1008) et un renflement (1006), le procédé comprenant les étapes consistant à :mettre en appui le renflement (1006) contre le trou (2004) dans le bouchon du distributeur de fluide (2000) pour créer un joint d'étanchéité ;exercer une force mécanique pour déplacer la tête (1008) de façon à ce que le renflement (1006) ne vienne pas en appui sur le trou (2004) ; etréduire la force mécanique de façon à ce que le renflement (1006) vienne en appui sur le trou (2004).

17. Procédé selon la revendication 16, dans lequel la tête (1008) comporte un élément de sollicitation et dans lequel l'étape de la mise en appui est exécutée par l'élément de sollicitation.

18. Procédé selon la revendication 16 ou 17, dans lequel l'étape consistant à réduire la force mécanique comporte la suppression de la force mécanique créant ainsi le joint d'étanchéité entre le renflement (1006) et le trou (2004).

19. Procédé selon l'une quelconque des revendications 15 à 18, dans lequel la tête (1008) possède une partie centrale et dans lequel la force mécanique est exercée sur la partie centrale de la tête (1008).

20. Procédé selon l'une quelconque des revendications 16 à 19, dans lequel l'étape consistant à exercer une force mécanique sur la tête (1008) crée une ouverture entre le renflement (1006) et le trou (2004) pour permettre un passage entre l'intérieur du distributeur de fluide (408) et l'extérieur du distributeur de fluide (408).

21. Procédé selon l'une quelconque des revendications 16 à 20, dans lequel le corps comporte une chambre de réservoir (410) et dans lequel le distributeur de fluide comprend en outre un évent (4000) à l'intérieur du corps, et dans lequel l'évent permet à de l'air d'entrer dans la chambre de réservoir (410).

22. Procédé selon la revendication 21, dans lequel l'évent (4000) empêche le liquide de sortir de la chambre du réservoir (410).
